(19) Europäisches Patentamt
European Patent Office
Office européen des brevets

(11) EP 2 811 004 B1

(12) **EUROPEAN PATENT SPECIFICATION**

(45) Date of publication and mention of the grant of the patent:
**31.01.2018 Bulletin 2018/05**

(51) Int Cl.:
***C09K 19/44*** *(2006.01)* ***C09K 19/54*** *(2006.01)*
***C09K 19/12*** *(2006.01)* ***C09K 19/30*** *(2006.01)*

(21) Application number: **14002807.7**

(22) Date of filing: **19.11.2011**

(54) **Liquid crystal medium and liquid crystal display**

Flüssigkristallmedium und Flüssigkristallanzeige

Milieu liquide cristallin et dispositif d'affichage à base de cristaux liquides

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2010 EP 10015361**

(43) Date of publication of application:
**10.12.2014 Bulletin 2014/50**

(62) Document number(s) of the earlier application(s) in accordance with Art. 76 EPC:
**11009185.7 / 2 463 355**

(73) Proprietor: **Merck Patent GmbH**
**64293 Darmstadt (DE)**

(72) Inventors:
- **Seung-Eun, Lee**
  **Seoul 140-212 (KR)**
- **Eun Young, Kim,**
  **Gunpo-Shi,**
  **Gyonggi-Do**
  **Gunpo 435-762 (KR)**
- **Chang-Jun, Yun**
  **Pyeongtaek 451-766 (KR)**
- **Seong-il, Kim**
  **Goyang 410-360 (KR)**

(56) References cited:
**EP-A1- 2 053 113** **DE-A1-102009 015 692**
**US-A1- 2006 115 606** **US-A1- 2008 117 379**
**US-A1- 2008 273 160**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 811 004 B1

## Description

The present invention relates to a liquid crystal medium having a negative dielectric anisotropy $\Delta\varepsilon$ and a liquid crystal display comprising that medium.

There is a great demand for LCDs (liquid crystal displays), in particular of the matrix type, that have very high specific resistance at the same time as a large working-temperature range, short response times even at low temperatures and a low threshold voltage. In particular, LC media for VA (vertically aligned) and, in particular for PS (polymer stabilized) VA, nematic display cells are required which facilitate the following advantages in the cells:

- extended nematic phase range (in particular down to low temperatures)
- the ability to switch at very low temperatures (e.g. for outdoor use, automobile, avionics)
- increased resistance to UV radiation (longer service life).

For VA displays, LC media are desired which enable lower threshold voltages and broader nematic phase ranges, in particular at low temperatures. A further widening of the available parameter latitude (clearing point, smectic-nematic transition or melting point, viscosity, dielectric parameters, elastic parameters) is also desired. Also, the LC media should have favourable values of ratio of the elastic constants $k_{33}/k_{11}$.

For TV, mobile phone and monitor applications, and in particular for "3 D"-applications, LC media are desired which have a fast response time and a low threshold voltage, furthermore a good LTS (low temperature stability). Also, depending on the thickness of the switchable LC layer, a moderate or high birefringence may be required.

US 2006/115606 A1, DE 10 2009 015692A1, EP 2 053 113 A1, US 2008/273160 A1 and US 2008/117379 A1 disclose liquid crystalline media for liquid crystal displays.

However, the LC media known in prior art have the disadvantage that they often do not allow all these requirements to be achieved simultaneously, without negatively affecting the other parameters of the LC cell.

The present invention has the aim of providing LC media, in particular for active matrix displays like those of the TFT (thin film transistor) type, and generally for VA displays, which do not have the above-mentioned disadvantages or only do so to a reduced extent, and preferably simultaneously have a very high specific resistance, a low threshold voltages, a low rotational viscosity, a broad nematic phase range with high clearing point, an improved LTS and fast switching times especially well suited for 3 D-applications. Another aim is to extend the pool of LC media available to the expert. Other aims are immediately evident from the following description.

It has been found that these aims can be achieved if an LC medium according to the present invention is used in LC panels and LC displays according to the present invention, in particular for 3 D-applications.

Thus, the present invention relates to a LC panel and a LC display device containing the following LC medium comprising

- 14 to 24 % of one or more compounds of formula I,
- 10 to 32 % of one or more compounds of formula II,
- 12 to 20 % of one or more compounds of formula III,
- 10 to 17 % of one or more compounds of formula IV,
- 34 to 40 % of one or more compounds of formula V and
- 0 to 9 % of one or more compounds of formula VI

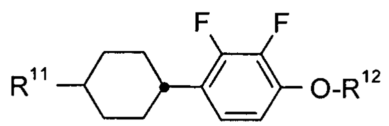

I

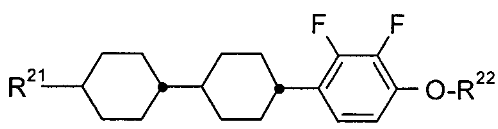

II

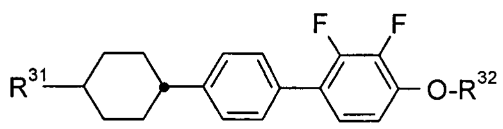

III

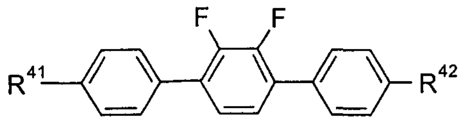

IV

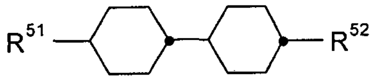

V

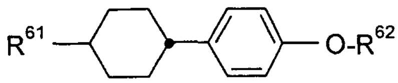

VI

in which

$R^{11}$, $R^{21}$, $R^{31}$, $R^{41}$, $R^{51}$ and $R^{61}$ are independently of each other straight-chain alkyl with 1 to 5 carbon atoms, preferably with 2 to 5 carbon atoms, and most preferably ethyl, propyl or pentyl,

$R^{12}$, $R^{22}$, $R^{32}$, $R^{42}$, $R^{52}$ and $R^{62}$ are independently of each other straight-chain alkyl with 1 to 6 carbon atoms, preferably with 1 to 4 carbon atoms, preferably methyl, ethyl, propyl or butyl, and

$R^{52}$ alternatively may be alkenyl with 2 to 5 carbon atoms, preferably *E*-1-alkenyl, most preferably vinyl or *E*-1-propenyl,

preferably each independently of each other

| | |
|---|---|
| $R^{11}$ and $R^{21}$ | are propyl or pentyl, |
| $R^{12}$ and $R^{22}$ | are ethyl or butyl, |
| $R^{31}$ and $R^{41}$ | are ethyl or propyl, |
| $R^{32}$ | is ethyl, |
| $R^{42}$ | is propyl or butyl, |
| $R^{51}$ | is ethyl or propyl, |
| $R^{52}$ | is propyl, vinyl or E-1-propenyl, |
| $R^{61}$ | is propyl, |
| $R^{62}$ | is methyl. |

In a preferred embodiment the liquid crystal medium essentially isists of the compounds of the aforementioned formulae I to VI. Especially preferred is a LC medium comprising one or more compounds selected from the group of the following compounds:

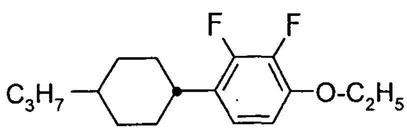

Ia

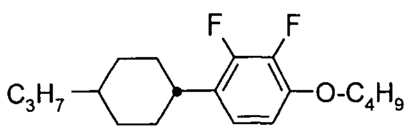

Ib

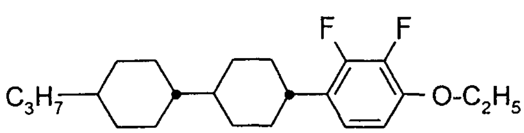

IIa

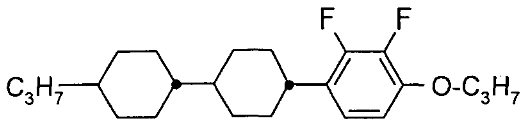

IIb

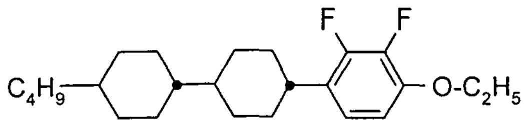

IIc

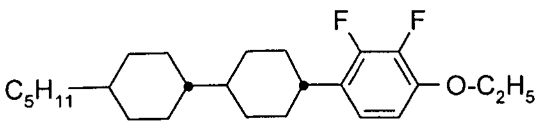

IId

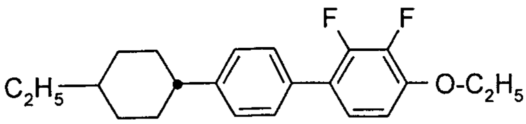

IIIa

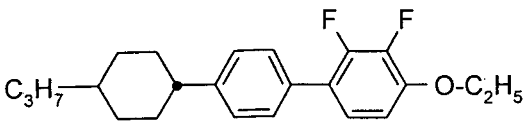

IIIb

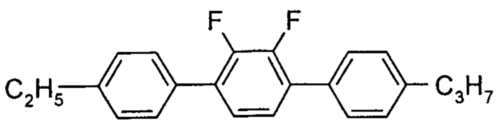

IVa

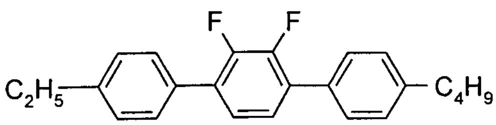

IVb

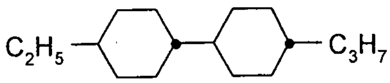

Va

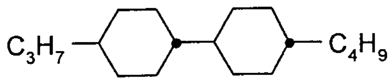

Vb

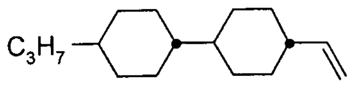

Vc

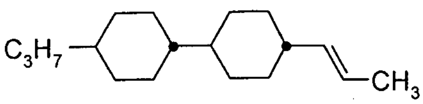

Vd

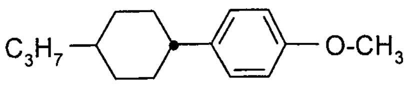

VIa

In an especially preferred embodiment the liquid crystal medium essentially consists of the compounds of the

aforementioned formulae Ia to VIa.
In a preferred embodiment the liquid crystal medium comprises

- 14 to 17 % of one or more compounds of formula I,
- 13 to 19 % of one or more compounds of formula II (pref. IIc and IId),
- 14 to 20 % of one or more compounds of formula III (pref. IIIa and IIIb),
- 10 to 17 % of one or more compounds of formula IV (pref. IVa and IVb),
- 34 to 36 % of one or more compounds of formula V (pref. Va and Vb) and
- 5 to 9 % of one or more compounds of formula VI.

In this preferred embodiment the liquid crystal medium preferably comprises

- 13 to 17 % of the compound of formula Ia,
- 9 to 11 % of the compound of formula IIc,
- 4 to 8 % of the compound of formula IId,
- 7 to 11 % of the compound of formula IIIa,
- 7 to 11 % of the compound of formula IIIb,
- 5 to 9 % of the compound of formula IVa,
- 5 to 10 % of the compound of formula IVb,
- 19 to 25 % of the compound of formula Va,
- 7 to 11 % of the compound of formula Vb and
- 5 to 9 % of the compound of formula VIa.

In a preferred embodiment, the LC medium consists exclusively of the above-mentioned compounds.
In another, second preferred a preferred embodiment the liquid crystal medium comprises

- 14 to 24 % of one or more compounds of formula I (pref. Ia and Ib),
- 10 to 32 % of one or more compounds of formula II (pref. IIa to IIc),
- 12 to 20 % of one or more compounds of formula III (pref. IIIa and IIIb),
- 10 to 17 % of one or more compounds of formula IV (pref. IVa and IVb), and
- 0 to 9 % of one or more compounds of formula VI.

In this preferred embodiment the liquid crystal medium preferably comprises

- 13 to 17 % of the compound of formula Ia,
- 1 to 7 % of the compound of formula Ib,
- 4 to 8 % of the compound of formula IIa,
- 2 to 6 % of the compound of formula IIb,
- 3 to 7 % of the compound of formula IIc,
- 6 to 10 % of the compound of formula IIIa,
- 6 to 10 % of the compound of formula IIIb,
- 6 to 10 % of the compound of formula IVa,
- 4 to 9 % of the compound of formula IVb and
- 34 to 40 % of the compound of formula Vc.

In a preferred embodiment, the LC medium consists exclusively of the above-mentioned compounds.
Alternatively, in any of the above preferred embodiments, the LC medium comprises a stabilizer, preferably a stabilizer of the HALS-type, more preferably TINUVIN®770

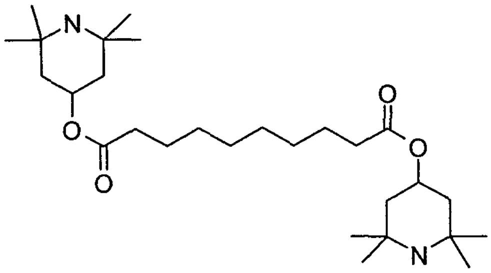

,

more preferably in a concentration in the range from 0.05 % to 1.0 %, even more preferably in the range from 0.010 % to 0.20 % and most preferably in the range from 0.010% to 0.050 %.

The LC media according to the present invention are characterized by

- a broad nematic phase with a very high clearing point,
- a low viscosity,
- good LTS (low temperature stability),
- a low threshold voltage,
- high UV stability,
- a suitably high absolute value for the negative dielectric anisotropy $\Delta\varepsilon$,
- a suitably high value for the optical anisotropy $\Delta n$.

In the pure state, the compounds of the formulae I-VI are colourless and form liquid crystal menopauses in a temperature range which is favourably located for electro-optical use. They are stable chemically, thermally and to light.

The compounds of the formulae I to VI are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants which are known per se, but are not mentioned here in greater detail.

The invention also relates to electro-optical displays and panels which contain LC media according to at least one of claims 1 to 13, and to the use of these LC media for electro-optical purposes. Very preferred are LC panels comprising an LC medium sandwiched by a pair of substrates; and electrodes for applying an electric field to the LC medium perpendicular to the surfaces of the substrate, the liquid crystal medium being vertically aligned with respect to the substrate surface at the time when no electric field is applied.

The LC mixtures according to the invention enable a significant widening of the available parameter latitude. Especially, it was found that they have a fast switching time, low threshold voltage, good LTS, high specific resistance, high UV stability and high HR (voltage (respectively capacitance) holding ratio) [as defined in S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)]. Also, the achievable combinations of clearing point, rotational viscosity $\gamma_1$, low $\Delta n$ and suitably high absolute value of the negative dielectric anisotropy are distinctively superior to materials known from prior art.

The LC media, which can be used in accordance with the invention, are prepared in a manner conventional per se. In general, the desired amount of the components used in the lesser amount is dissolved in the components making up the principal constituent, advantageously at elevated temperature.

The LC media may also comprise further additives known to the person skilled in the art and described in the literature. For example, 0-15% of one or more additives selected from the group of pleochroic dyes, stabilizers, for example UV stabilizers, antioxidants, chiral dopants, reactive mesogens with or without polymerization initiators, microparticles, nanoparticles, can be added to the liquid crystal medium according to this invention. Suitable chiral dopants and stabilizers are shown in Tables B and C, respectively.

In the present application and in the example below, the structures of the components of the LC media are indicated by the following acronyms.

Particular preference is given to liquid-crystal mixtures which comprise compounds selected from the following table:

**Table A**

(n and m: each independently from each other are 1, 2, 3, 4 or 5)

(continued)

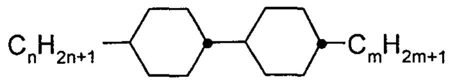

**CC-n-m**

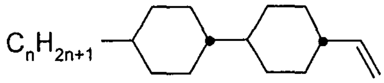

**CC-n-V**

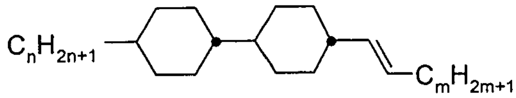

**CC-n-Vm**

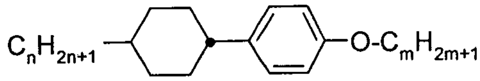

**CP-n-Om**

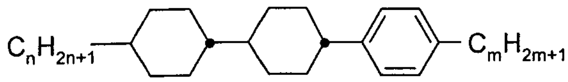

**CCP-n-m**

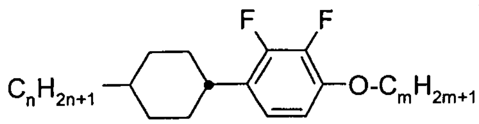

**CY-n-Om**

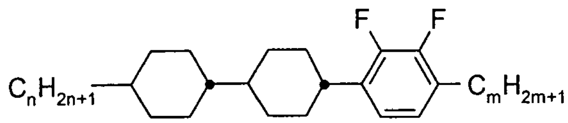

**CCY-n-m**

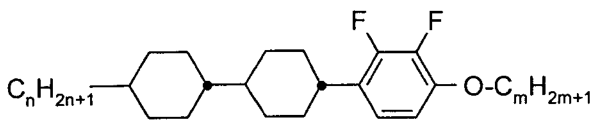

**CCY-n-Om**

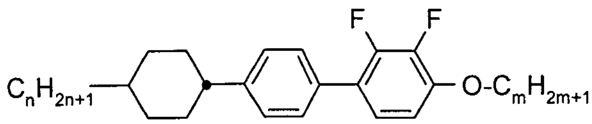

**CPY-n-Om**

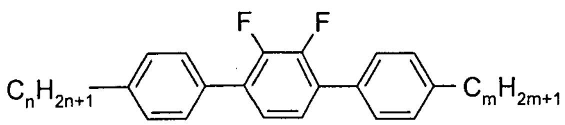

**PYP-n-m**

Table B shows chiral dopants that can beneficially be added to the LC medium according to the present invention, preferably in amounts of from 0.1 to 10 wt.%, very preferably from 0.1 to 6 wt.%.

**Table B**

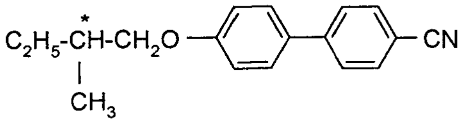

**C 15**

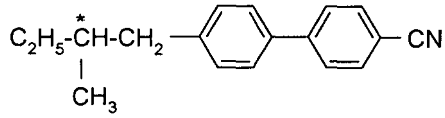

**CB 15**

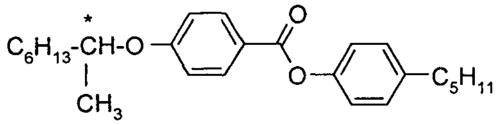

**CM 21**

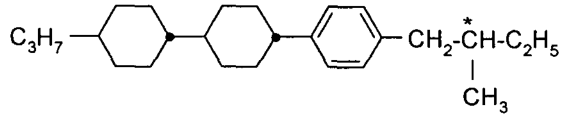

**CM 44**

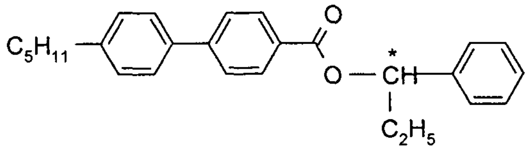

**CM 45**

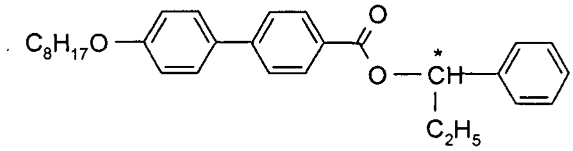

**CM 47**

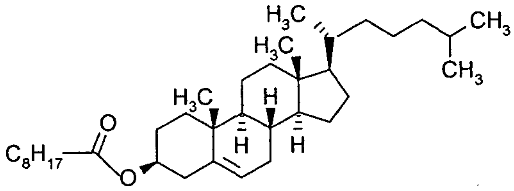

**CN**

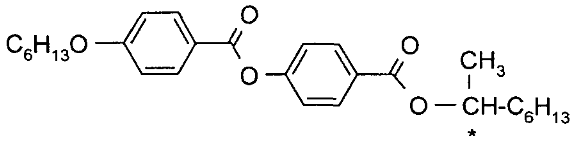

**R/S-811**

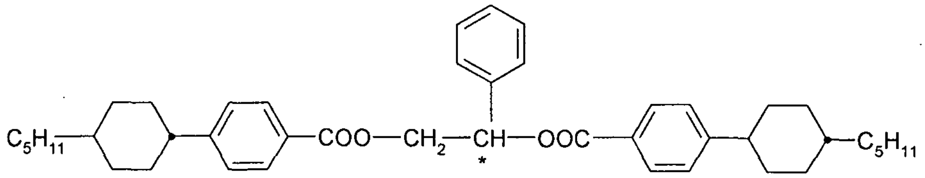

**R/S-1011**

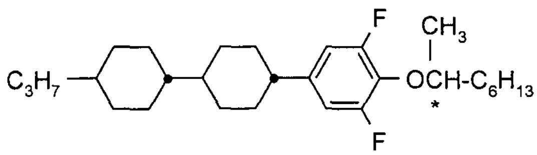

**R/S-2011**

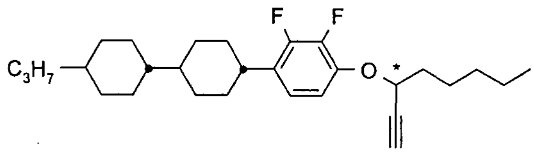

**R/S-3011**

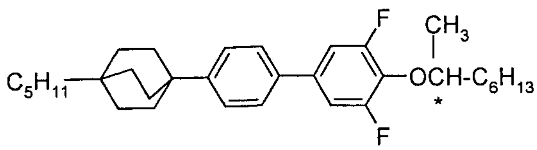

**R/S-4011**

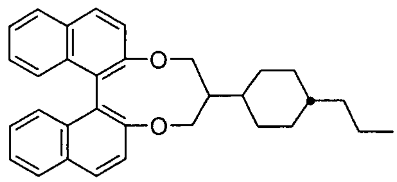

**R/S-5011**

The following table shows possible stabilizers that can be added to the LC media according to the present invention.

**Table C**

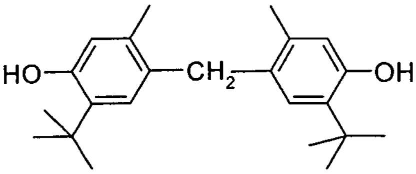

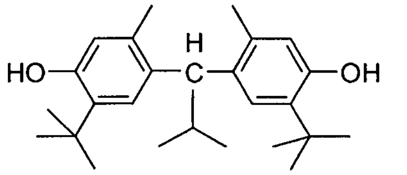

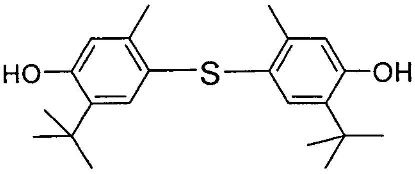

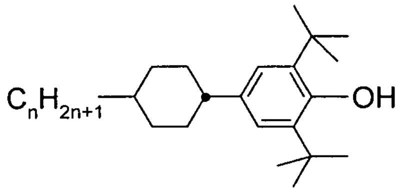

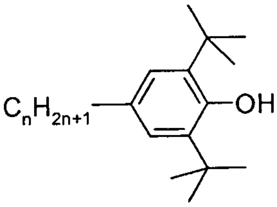

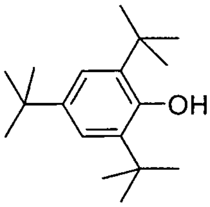

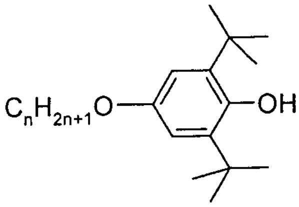

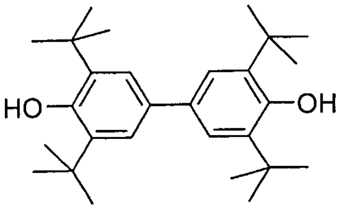

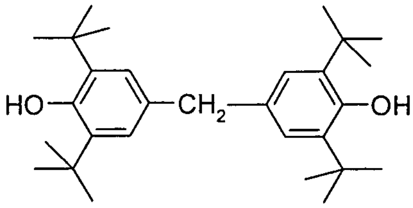

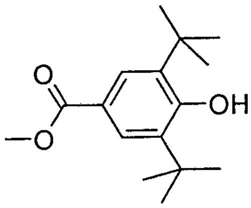

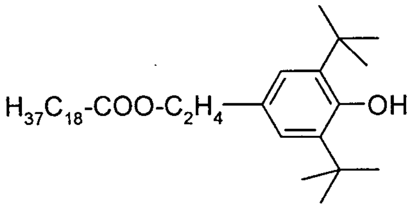

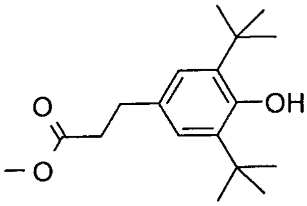

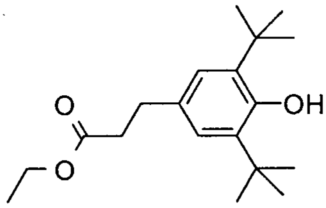

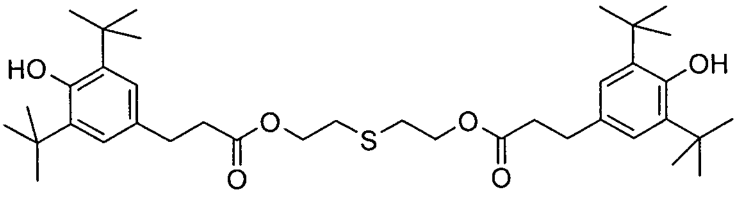

(continued)

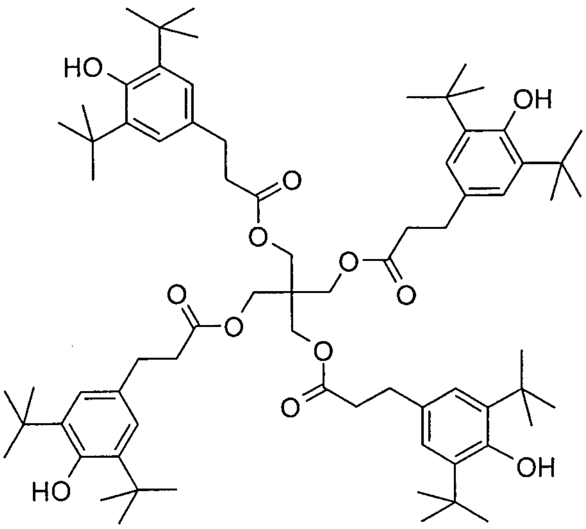

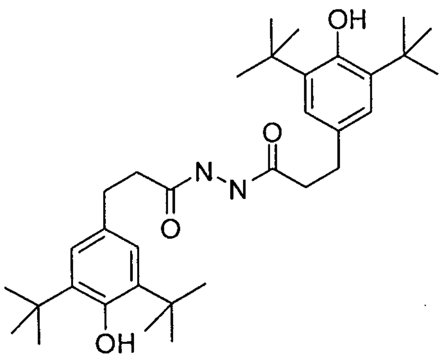

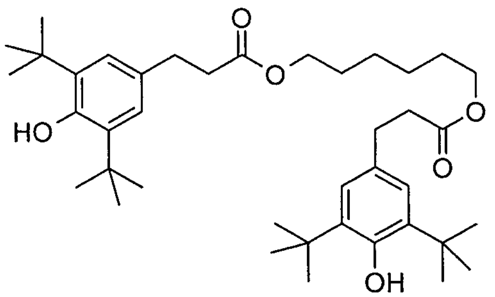

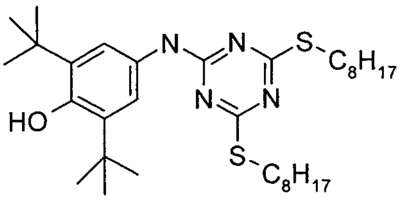

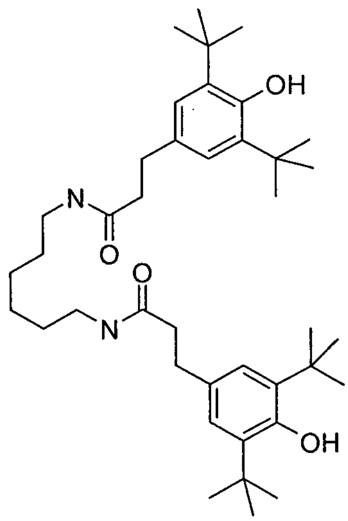

(continued)

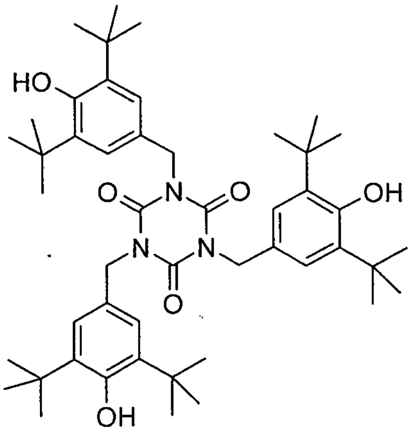

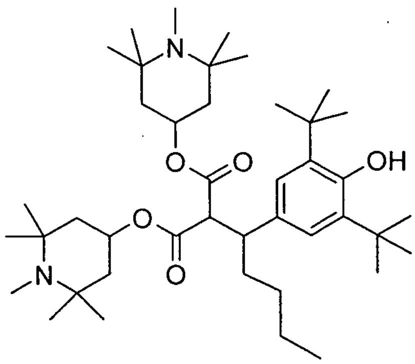

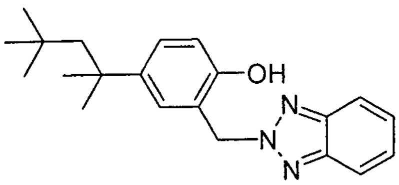

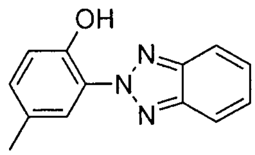

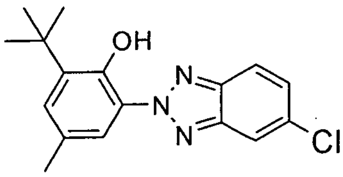

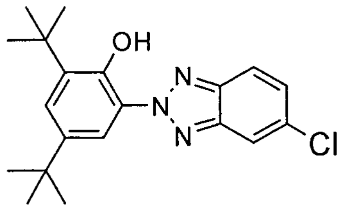

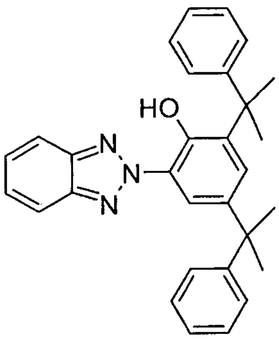

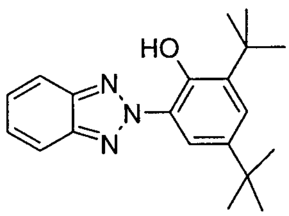

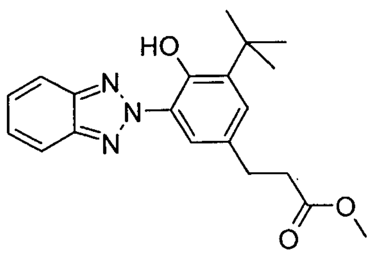

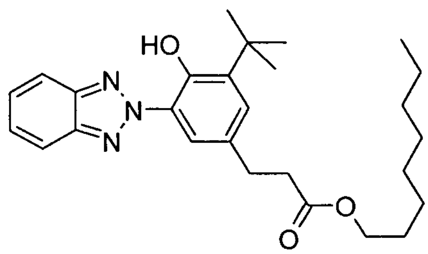

(continued)

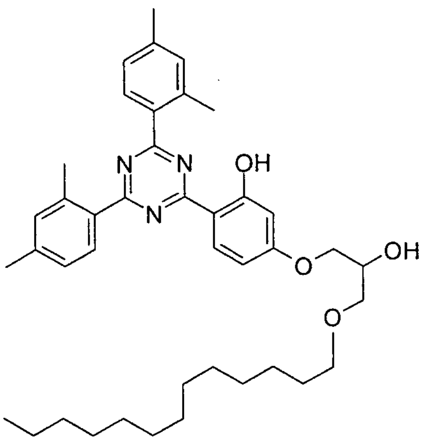

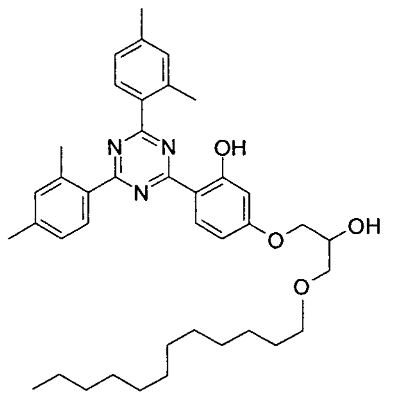

and, in particular,:

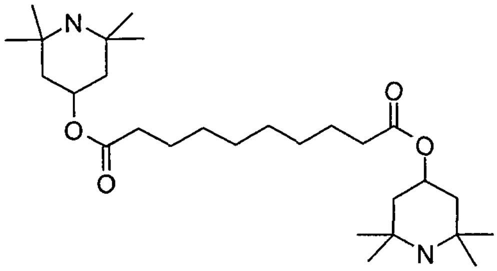

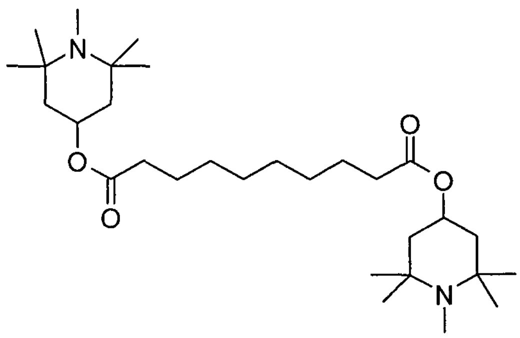

Above and below, percentages are per cent by weight. All temperatures are given in degrees Celsius. m.p. denotes melting point, cl.p. = clearing point. Furthermore, C = crystal state, N = nematic phase, S = smectic phase and I = isotropic phase. The data between these symbols represent the transition temperatures. The optical data are measured at 20°C, unless expressly stated otherwise.

All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise.

For the present invention, the term "threshold voltage" relates to the capacitive threshold ($V_0$), also known as the Freedericks threshold, unless explicitly indicated otherwise.

The term threshold voltage refers in the instant application to the optical threshold and is given for 10 % relative contrast ($V_{10}$) and the term saturation voltage refers to the optical saturation and is given for 90 % relative contrast ($V_{90}$) both, if not explicitly stated otherwise. The capacitive threshold voltage ($V_0$), also called Freedericks-threshold ($V_{Fr}$) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade.

The optical anisotropy ($\Delta n$) is determined at a wavelength of 589.3 nm. The dielectric anisotropy ($\Delta\varepsilon$) is determined at a frequency of 1 kHz. The threshold voltages, as well as all other electro-optical properties are been determined with test cells prepared at Merck KGaA, Germany. The test cells for the determination of $\Delta\varepsilon$ have a cell gap of approximately 20 $\mu$m. The electrode is a circular ITO electrode with an area of 1.13 $cm^2$ and a guard ring. The orientation layers are JALS 2096-R1 from JSR (Japan Synthetic Rubber), Japan for homeotropic orientation ($\varepsilon_{\|}$) and polyimide AL-1054 also from JSR for planar homogeneous orientation ($\varepsilon_{\perp}$). The capacities are determined with a frequency response analyser Solatron 1260 using a sine wave with a voltage of 0.3 $V_{rms}$. The electro-optical data are determined in a VA cell. These test cells used have a cell gap selected to have an optical retardation ($d \cdot \Delta n$) matching the first transmission minimum according to Gooch and Tarry at an optical retardation ($d \cdot \Delta n$) of 0.5 $\mu$m at 20°C, unless expressly stated otherwise.

The light used in the electro-optical measurements is white light. The set up used is an equipment commercially

available from Autronic Melchers, Karlsruhe, Germany. The characteristic voltages are determined under perpendicular observation. The threshold ($V_{10}$) - mid grey ($V_{50}$) - and saturation ($V_{90}$) voltages are been determined for 10 %, 50 % and 90 % relative contrast, respectively.

The response times are given as rise time ($\tau_{on}$) for the time for the change of the relative contrast from 0 % to 90 % ($t_{90}$ - $t_0$), i.e. including the delay time ($t_{10}$ - $t_0$), as decay time ($\tau_{off}$) for the time for the change of the relative contrast from 100 % back to 10 % ($t_{100}$ - $t_{10}$) and as the total response time ($\tau_{total} = \tau_{on} + \tau_{off}$), respectively.

The voltage holding ratio is determined in test cells produced at Merck Japan Ltd. The measurement cells have alkaline free glass substrates and are constructed with polyimide alignment layers (SE7492 from Nissan Chemical Industries $^{LTD.}$) with a layer thickness of 50 nm, which have been rubbed perpendicular to one another. The layer thickness is uniformly 6.0 μm. The surface area of the transparent electrodes of ITO is 1 cm x 1 cm.

The voltage holding ratio is determined after 30 minutes in the oven at 70°C ($HR_{70}$). The voltage used has a frequency of 60 Hz.

The rotational viscosity is determined using the transient current method and the flow viscosity in a modified Ubbelohde viscometer. For liquid-crystal mixtures ZLI-2293, ZLI-4792 and MLC-6608, all products from Merck KGaA, Darmstadt, Germany, the rotational viscosity values determined at 20°C are 161 mPa·s, 133 mPa·s and 186 mPa·s respectively, and the flow viscosity values (ν) are 21 $mm^2 \cdot s^{-1}$, 14 $mm^2 \cdot s^{-1}$ and 27 $mm^2 \cdot s^{-1}$ respectively.

The following symbols are used in the present application:

$V_0$ threshold voltage, capacitive [V] at 20°C,
$n_e$ extraordinary refractive index measured at 20°C and 589 nm,
$n_o$ ordinary refractive index measured at 20°C and 589 nm,
$\Delta n$ optical anisotropy ($\Delta n = n_e - n_o$),
$\varepsilon_\perp$ dielectric susceptibility perpendicular to the director at 20°C and 1 kHz,
$\varepsilon_\parallel$ dielectric susceptibility parallel to the director at 20°C and 1 kHz,
$\Delta\varepsilon$ dielectric anisotropy at 20°C and 1 kHz,

$$(\Delta\varepsilon = \varepsilon_\parallel - \varepsilon_\perp),$$

$\nu$ flow viscosity measured at 20°C [$mm^2 \cdot s^{-1}$],
$\gamma_1$ rotational viscosity measured at 20°C [mPa·s],
$K_1$ elastic constant, "splay" deformation at 20°C [pN],
$K_2$ elastic constant, "twist" deformation at 20°C [pN],
$K_3$ elastic constant, "bend" deformation at 20°C [pN],
LTS low-temperature stability (phase stability) determined in test cells,
$V_0$ capacitive threshold voltage also called Freedericks threshold voltage,
$V_{10}$ threshold voltage, i.e. voltage for 10% relative contrast
$V_{50}$ mid-grey voltage, i.e. voltage for 50% relative contrast and
$V_{90}$ saturation voltage, i.e. voltage for 90% relative contrast ($V_{10}$, $V_{50}$ and $V_{90}$ all for a viewing angle perpendicular to the plate surface).

The following examples explain the present invention without limiting it.

Examples 1.0 and 1.1

| Mixture M1: | | | | | | |
|---|---|---|---|---|---|---|
| Composition | | | Physical Properties | | | |
| Compound | | | T(N,I) | = | 74.0 | °C |
| No. | Abbreviation | c/ % | $n_e$ (20°C, 589.3 nm) | = | 1.5927 | |
| 1 | CY-3-O2 | 15.0 | $\Delta n$ (20°C, 589.3 nm) | = | 0.1072 | |
| 2 | CY-3-O4 | 3.0 | $\varepsilon_\perp$ (20°C, 1 kHz) | = | 6.6 | |
| 3 | CCY-3-O2 | 6.0 | $\Delta\varepsilon$ (20°C, 1 kHz) | = | -3.0 | |
| 4 | CCY-3-O3 | 3.5 | $k_1$(20°C) | = | 12.4 | pN |

(continued)

| Mixture M1: | | | | | | |
|---|---|---|---|---|---|---|
| Composition | | | Physical Properties | | | |
| 5 | CCY-4-O2 | 5.0 | $k_3$(20°C) | = | 13.9 | pN |
| 6 | CPY-2-O2 | 8.0 | $\gamma_1$ (20°C) | = | 94 | mPa · s |
| 7 | CPY-3-O2 | 8.0 | $V_0$ (20°C) | = | 2.27 | V |
| 8 | PYP-2-3 | 8.0 | | | | |
| 9 | PYP-2-4 | 6.5 | | | | |
| 10 | CC-3-V | 37.0 | | | | |
| Σ | | 100.0 | | | | |

This mixture is prepared and investigated. Subsequently 0.030 % of TINUVIN®770 is added to the mixture. Then the mixture is introduced into a respective test cell and investigated again. The mixture M1.1 is much more stable against exposure to blue light and especially to UV irradiation.

| Mixture M1.1: | | | | | | |
|---|---|---|---|---|---|---|
| Composition | | | Physical Properties | | | |
| Compound | | | T(N,I) | = | 73.9 | °C |
| No. | Abbreviation | c/ % | $n_e$ (20°C, 589.3 nm) | = | 1.5925 | |
| 1 | M1 | 99.97 | Δn (20°C, 589.3 nm) | = | 0.1072 | |
| 2 | T770 | 0.03 | $\varepsilon_\perp$ (20°C, 1 kHz) | = | 6.6 | |
| Σ | | 100.0 | Δε (20°C, 1 kHz) | = | -3.0 | |
| | | | $k_1$(20°C) | = | 12.2 | pN |
| | | | $k_3$(20°C) | = | 13.9 | pN |
| | | | $\gamma_1$ (20°C) | = | 93 | mPa · s |
| | | | $V_0$ (20°C) | = | 2.26 | V |
| Remark: T770 = TINUVIN®770 | | | | | | |

Comparative Examples 2.0 and 2.1

| Mixture M2: | | | | | | |
|---|---|---|---|---|---|---|
| Composition | | | Physical Properties | | | |
| Compound | | | T(N,I) | = | 75.5 | °C |
| No. | Abbreviation | c/ % | ne (20°C, 589.3 nm) | = | 1.5935 | |
| 1 | CY-3-O2 | 15.0 | Δn (20°C, 589.3 nm) | = | 0.1075 | |
| 2 | CCY-4-O2 | 9.5 | $\varepsilon_\perp$ (20°C, 1 kHz) | = | 6.5 | |
| 3 | CCY-5-O2 | 5.0 | Δε (20°C, 1 kHz) | = | -3.0 | |
| 4 | CPY-2-O2 | 9.0 | $k_1$(20°C) | = | 12.9 | pN |
| 5 | CPY-3-O2 | 9.0 | $k_3$(20°C) | = | 13.0 | pN |
| 6 | PYP-2-3 | 7.0 | $\gamma_1$ (20°C) | = | 115 | mPa · s |
| 7 | PYP-2-4 | 7.5 | $V_0$ (20°C) | = | 2.21 | V |
| 8 | CC-2-3 | 22.0 | | | | |
| 9 | CC-3-4 | 9.0 | | | | |
| 10 | CP-3-O1 | 7.0 | | | | |
| Σ | | 100.0 | | | | |

This mixture is prepared and investigated. Subsequently 0.030 % of TINUVIN®770 is added to this mixture. Then the mixture M2.1 is introduced into a respective test cell and investigated again as described under example 1. Like in example 1, also here the stability is improved.

| Mixture M2.1: | | | | | | |
|---|---|---|---|---|---|---|
| Composition | | | Physical Properties | | | |
| Compound | | | T(N,I) | = | 75.3 | °C |
| No. | Abbreviation | c/ % | $n_e$ (20°C, 589.3 nm) | = | 1.5930 | |
| 1 | M2 | 99.97 | $\Delta n$ (20°C, 589.3 nm) | = | 0.1075 | |
| 2 | T770 | 0.03 | $\varepsilon_\perp$ (20°C, 1 kHz) | = | 6.5 | |
| $\Sigma$ | | 100.0 | $\Delta\varepsilon$ (20°C, 1 kHz) | = | 3.0 | |
| | | | $k_1$(20°C) | = | 12.9 | pN |
| | | | $k_3$(20°C) | = | 13.1 | pN |
| | | | $\gamma_1$ (20°C) | = | 116 | mPa · s |
| | | | $V_0$ (20°C) | = | 2.20 | V |
| Remark: T770 = TINUVIN®770 | | | | | | |

## Claims

**1.** Liquid crystal medium having a negative dielectric anisotropy $\Delta\varepsilon$ comprising

- 14 to 24 % of one or more compounds of formula I,
- 10 to 32 % of one or more compounds of formula II,
- 12 to 20 % of one or more compounds of formula III,
- 10 to 17 % of one or more compounds of formula IV
- 34 to 40 % of one or more compounds of formula V and
- 0 to 9 % of one or more compounds of formula VI

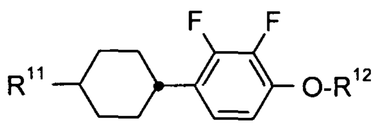

I

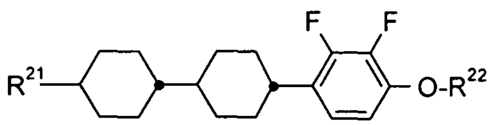

II

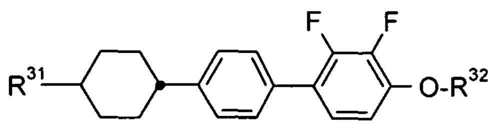

III

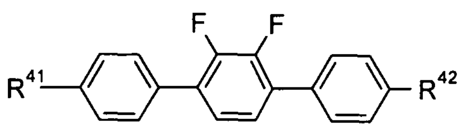

IV

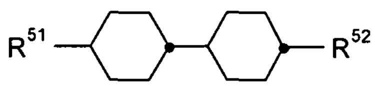

V

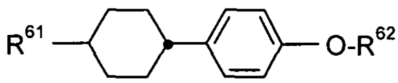

VI

in which

$R^{11}$, $R^{21}$, $R^{31}$, $R^{41}$, $R^{51}$ and $R^{61}$ are independently of each other straight-chain alkyl with 1 to 5 carbon atoms,
$R^{12}$, $R^{22}$, $R^{32}$, $R^{42}$, $R^{52}$ and $R^{62}$ are independently of each other straight-chain alkyl with 1 to 6 carbon atoms and
$R^{52}$ alternatively may be alkenyl with 2 to 5 carbon atoms.

**2.** Liquid crystal medium according to claim 1, **characterized in that** it comprises at least one compound selected from the group of compounds of formulae Ia and Ib:

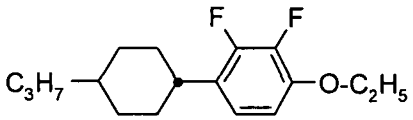

Ia

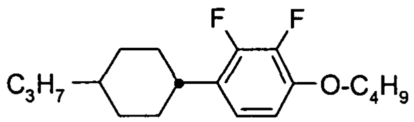

Ib.

**3.** Liquid crystal medium according to claim 1 or 2, **characterized in that** it comprises at least a compound selected from the group of compounds of formulae IIa to IId:

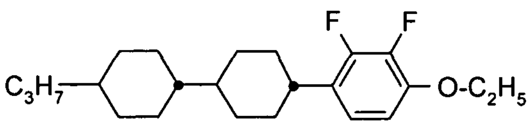

IIa

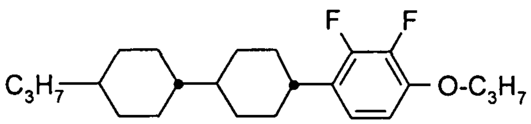

IIb

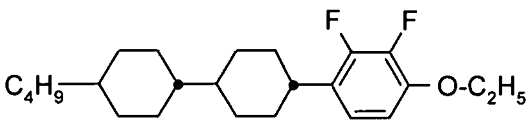

IIc

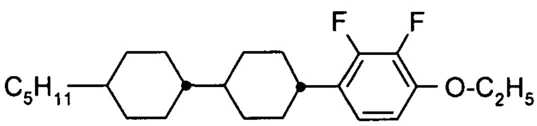

IId.

**4.** Liquid crystal medium according to one or more of claims 1 to 3, **characterized in that** it comprises one or more compounds selected from the group of compounds of formulae IIIa and IIIb:

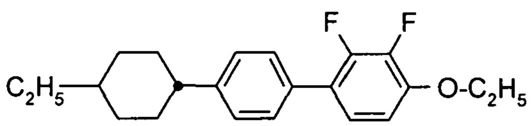

IIIa

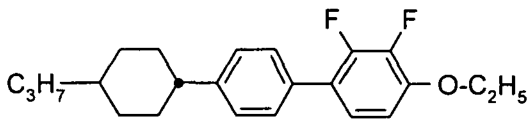

IIIb.

**5.** Liquid crystal medium according to one or more of claims 1 to 4, **characterized in that** it comprises one or more compounds selected from the group of compounds of formulae IVa and IVb:

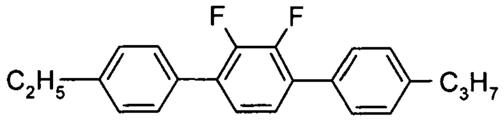

IVa

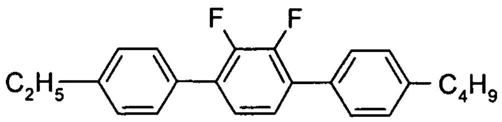

IVb.

**6.** Liquid crystal medium according to one or more of claims 1 to 5, **characterized in that** it comprises one or more compounds selected from the group of compounds of formulae Va to and Vd :

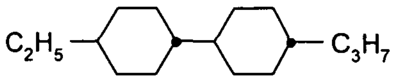

Va

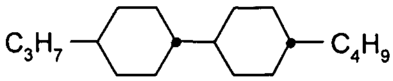

Vb

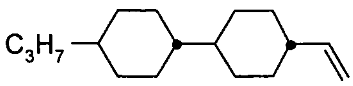

Vc

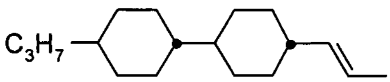

Vd.

**7.** Liquid crystal medium according to one or more of claims 1 to 6, **characterized in that** it comprises a compound of formula VIa:

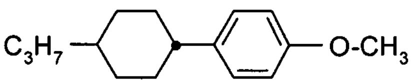

VIa.

**8.** Liquid crystal medium according to one or more of claims 1 to 7, **characterized in that** it comprises one or more compounds of the group of the following formulae:

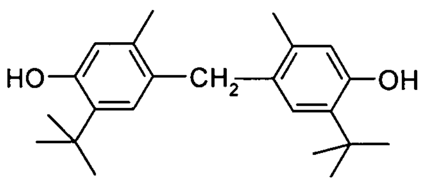

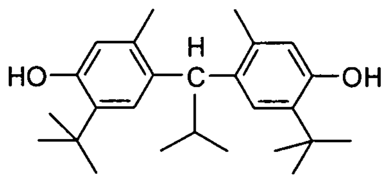

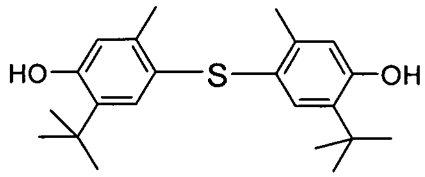

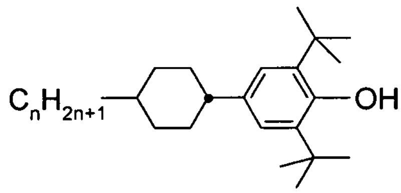

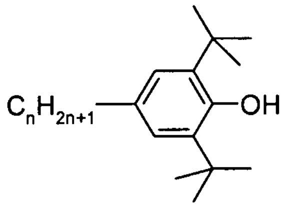

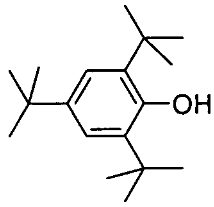

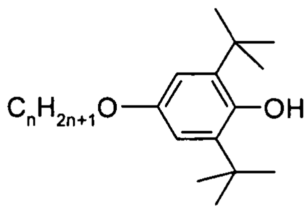

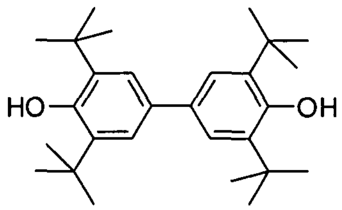

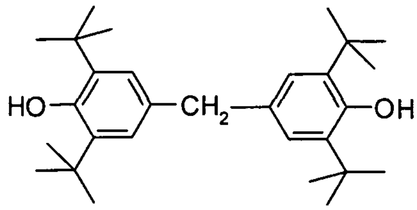

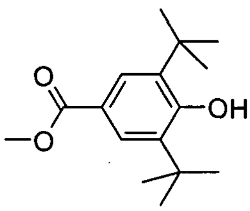

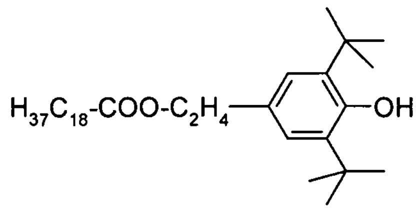

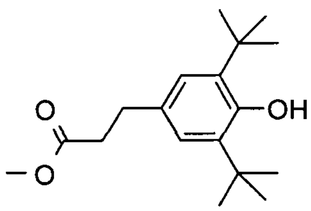

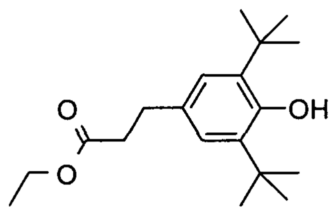

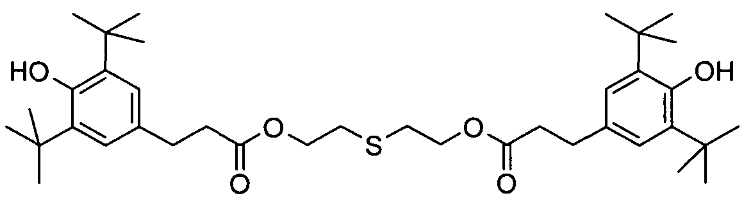

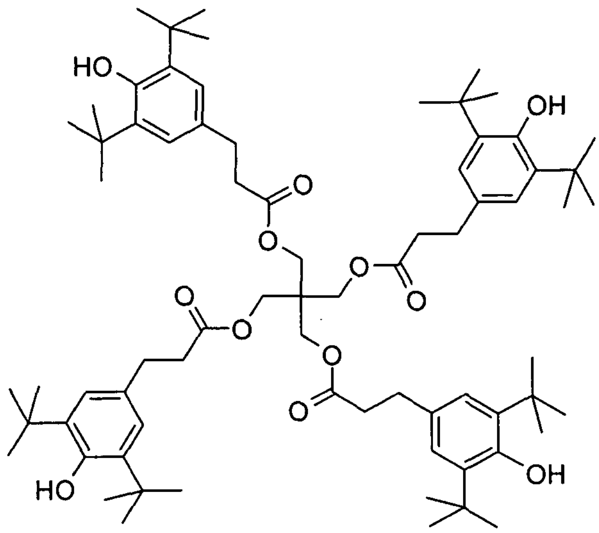

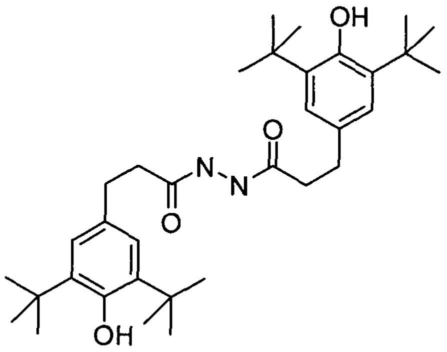

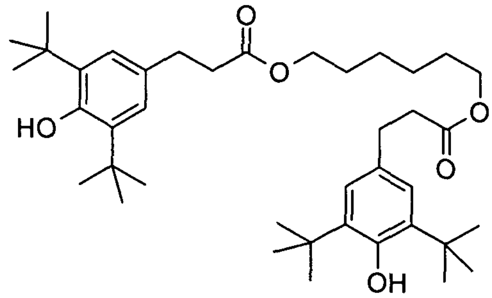

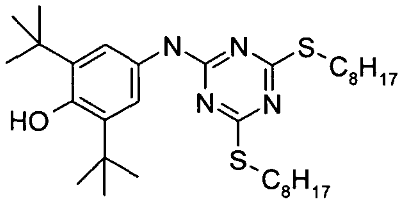

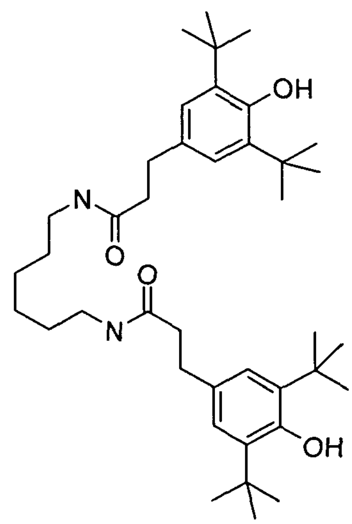

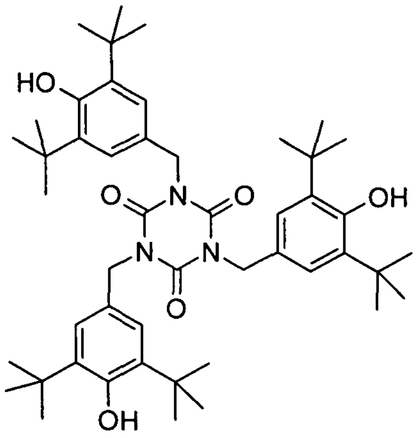

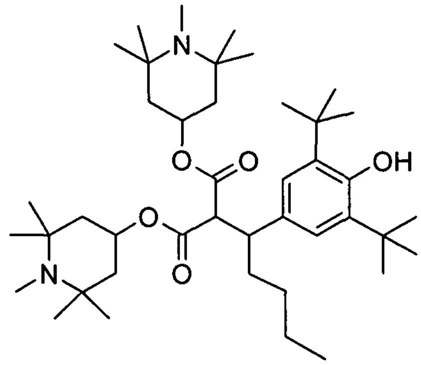

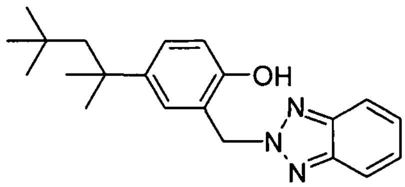

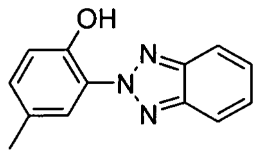

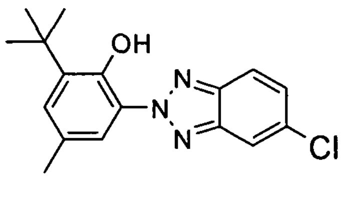

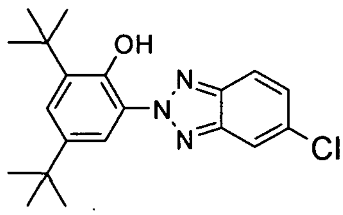

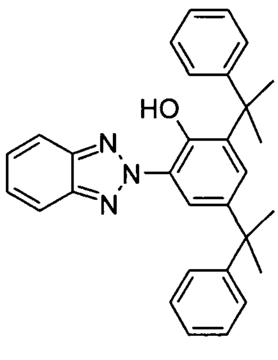

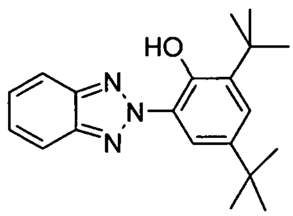

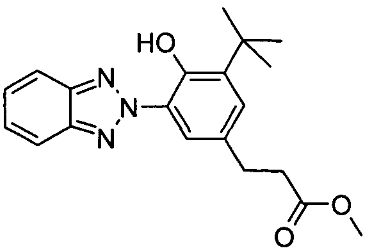

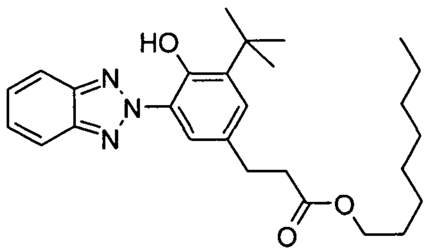

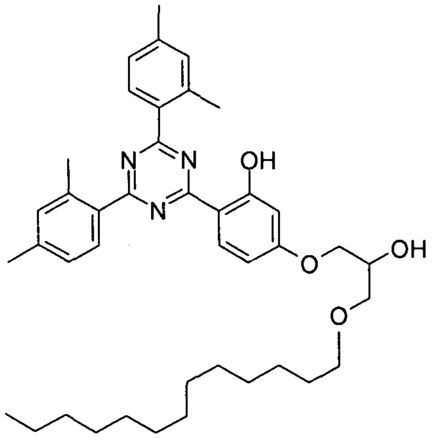

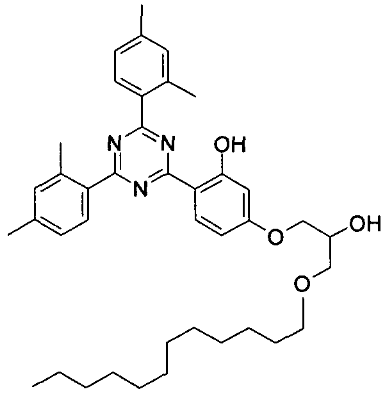

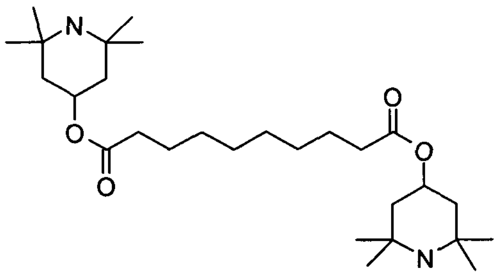

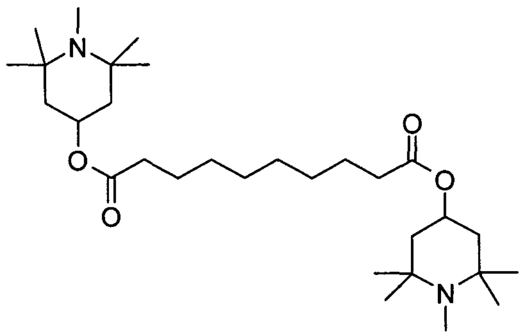

.

9. Liquid crystal medium according to one or more of claims 1 to 8, **characterized in that** it comprises:

- 13 to 17 % of the compound of formula Ia,
- 1 to 7 % of the compound of formula Ib,
- 4 to 8 % of the compound of formula IIa,
- 2 to 6 % of the compound of formula IIb,
- 4 to 8 % of the compound of formula IIc,
- 6 to 10 % of the compound of formula IIIa,
- 6 to 10 % of the compound of formula IIIb,
- 6 to 10 % of the compound of formula IVa,
- 4 to 9 % of the compound of formula IVb and
- 34 to 40 % of the compound of formula Vc.

10. Liquid crystal medium according to one or more of claims 1 to 9, **characterized in that** the LC medium comprises one or more additives selected from the group of pleochroic dyes, UV stabilizers, antioxidants, chiral dopants, reactive mesogens, polymerization initiators, microparticles and nanoparticles.

11. Liquid crystal medium according to one or more of claims 1 to 10, **characterized in that** it comprises one or more compounds selected from the group of compounds of the following formulae

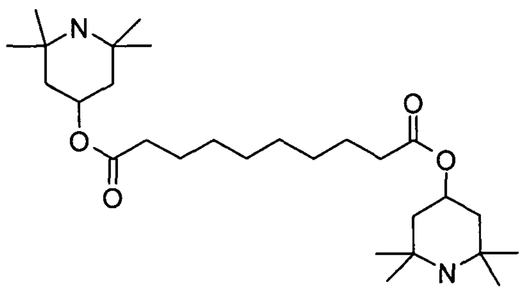

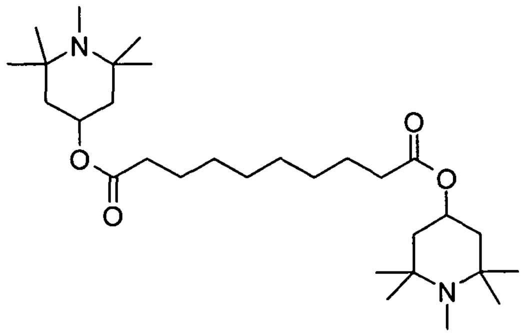

.

**12.** A method of stabilizing a liquid crystal medium according one or more of claims 1 to 10 by adding one or more compounds selected from the group of compounds of the following formulae

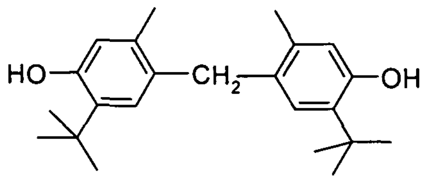

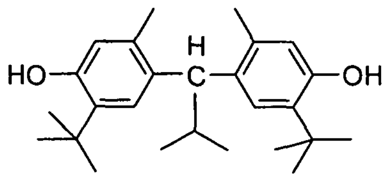

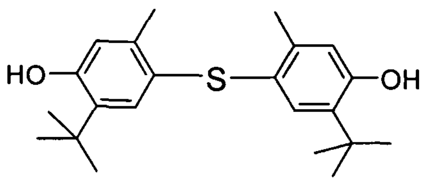

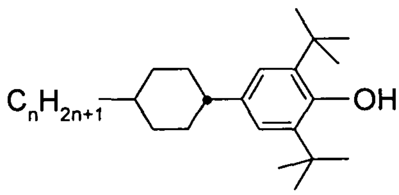

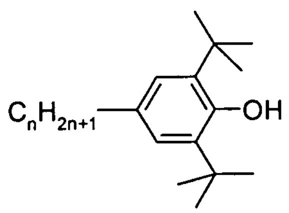

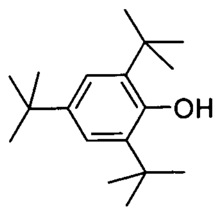

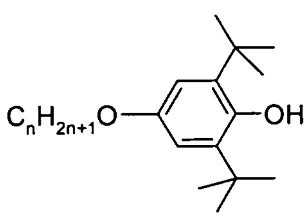

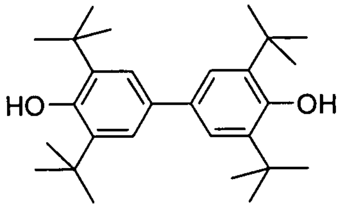

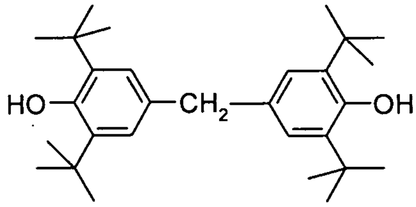

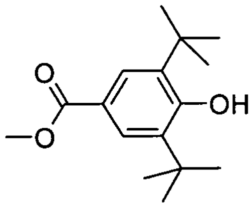

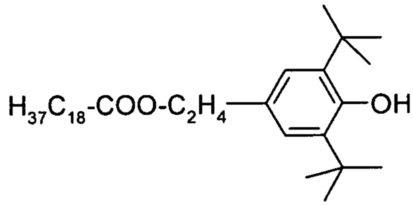

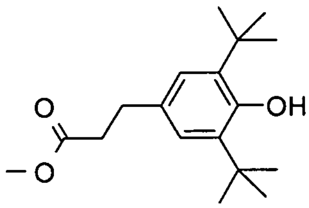

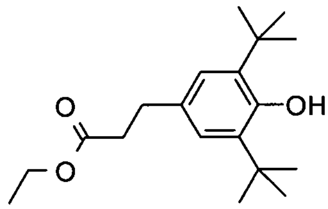

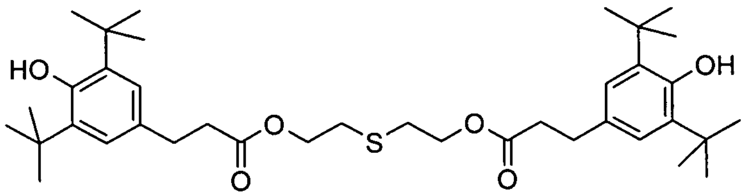

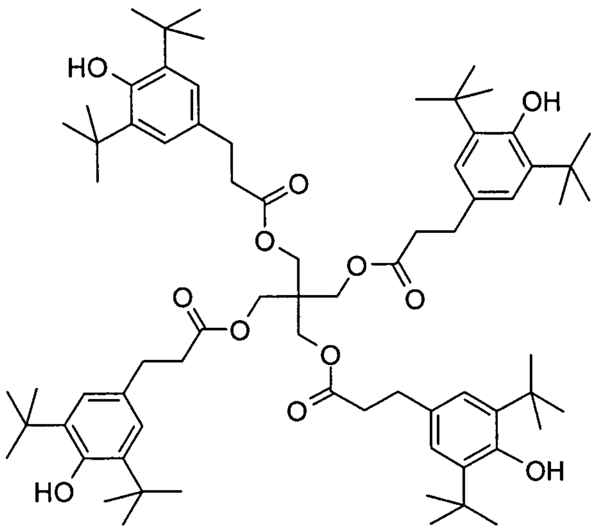

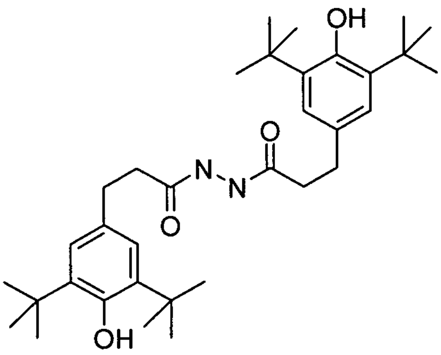

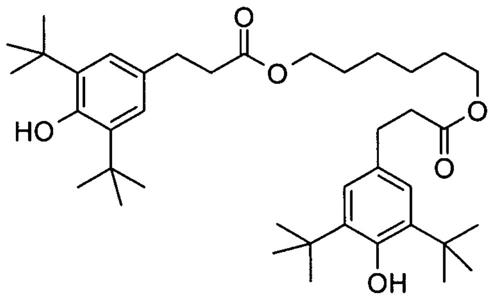

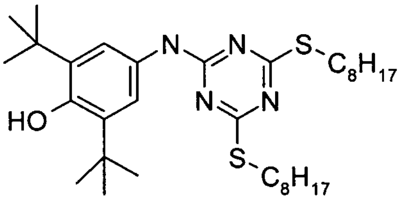

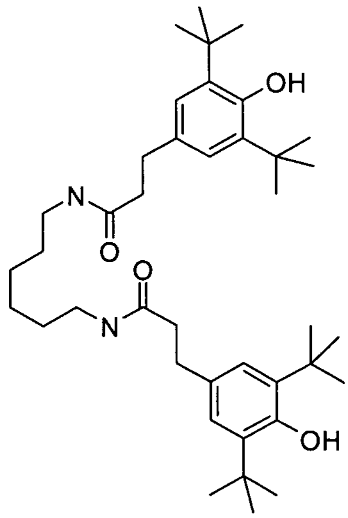

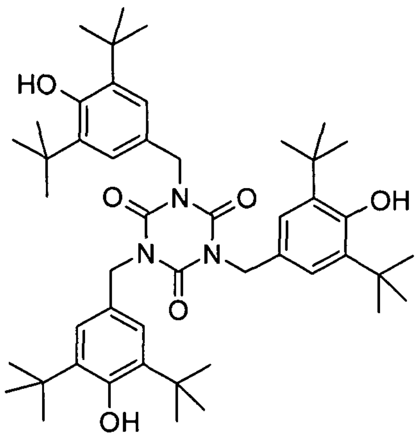

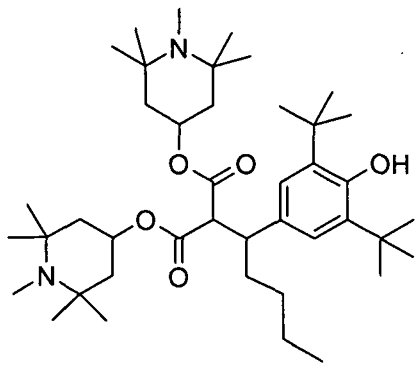

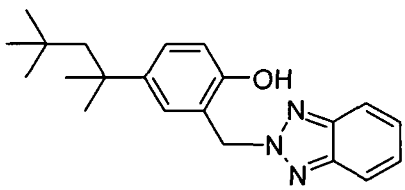

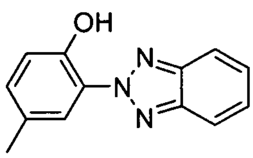

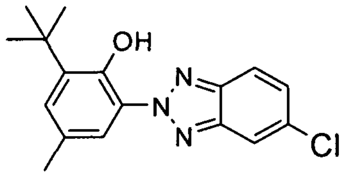

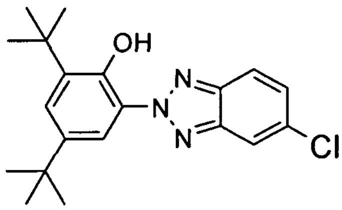

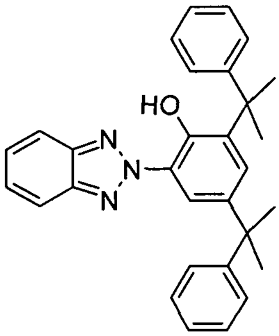

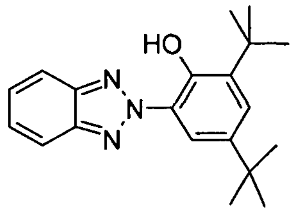

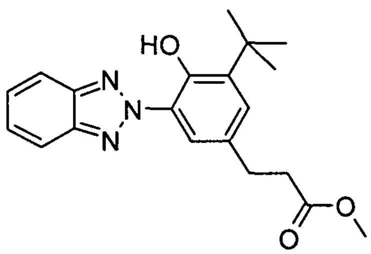

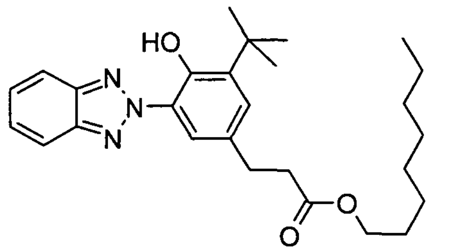

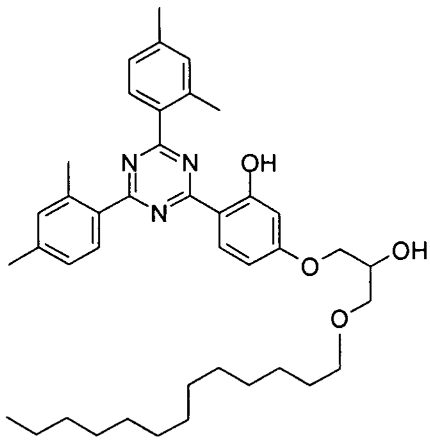

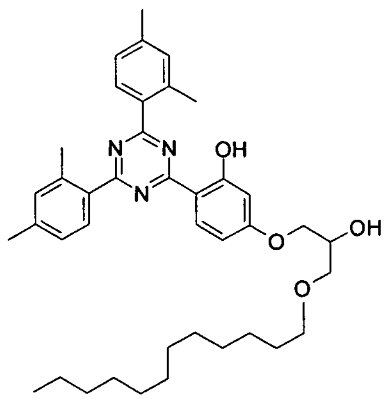

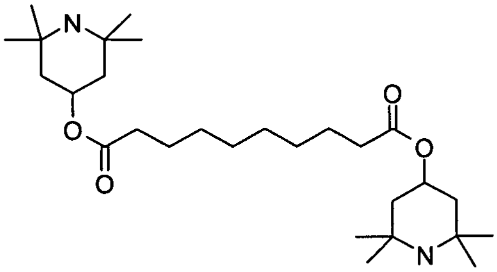

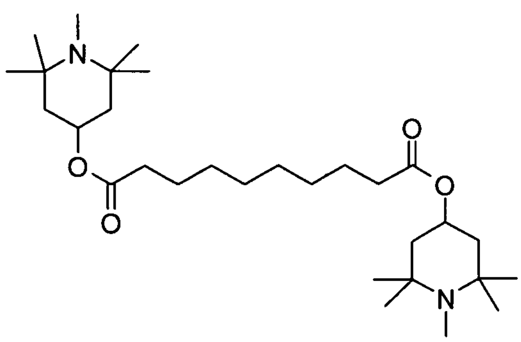

to the liquid crystal medium.

**13.** Use of a liquid crystal medium according to one or more of claims 1 to 11 for electro-optical purposes.

**14.** Electro-optical liquid crystal display containing a liquid crystal medium according to one or more of claims 1 to 11.

**15.** A liquid crystal panel comprising a liquid crystal medium according to one or more of claims 1 to 11 sandwiched by a pair of substrates; and electrodes for applying an electric field to the liquid crystal medium parallel to the surfaces of the substrate, the liquid crystal medium being vertically aligned with respect to the surfaces of the substrates at the time when no electric field is applied.

**Patentansprüche**

**1.** Flüssigkristallmedium mit negativer dielektrischer Anisotropie $\Delta\varepsilon$ enthaltend

- 14 bis 24 % von einer oder mehreren Verbindungen der Formel I,
- 10 bis 32 % von einer oder mehreren Verbindungen der Formel II,
- 12 bis 20 % von einer oder mehreren Verbindungen der Formel III,
- 10 bis 17 % von einer oder mehreren Verbindungen der Formel IV,
- 34 bis 40 % von einer oder mehreren Verbindungen der Formel V und
- 0 bis 9 % von einer oder mehreren Verbindungen der Formel VI

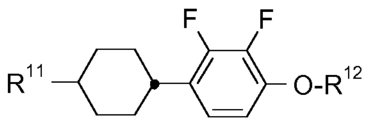

I

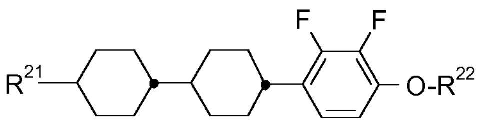

II

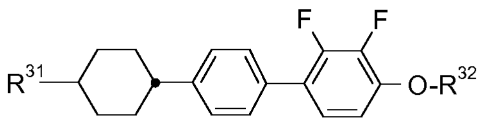

III

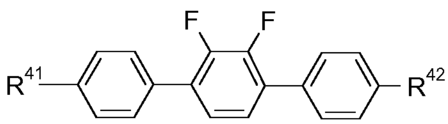

IV

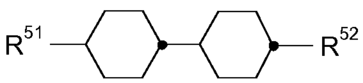

V

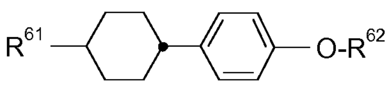

VI

in denen

$R^{11}$, $R^{21}$, $R^{31}$, $R^{41}$, $R^{51}$ und $R^{61}$ unabhängig voneinander geradkettiges Alkyl mit 1 bis 5 Kohlenstoffatomen bedeuten,
$R^{12}$, $R^{22}$, $R^{32}$, $R^{42}$, $R^{52}$ und $R^{62}$ unabhängig voneinander geradkettiges Alkyl mit 1 bis 6 Kohlenstoffatomen bedeuten und
$R^{52}$ auch Alkenyl mit 2 bis 5 Kohlenstoffatomen bedeuten kann.

2. Flüssigkristallmedium nach Anspruch 1, **dadurch gekennzeichnet, dass** es mindestens eine Verbindung enthält, die aus der Gruppe der Verbindungen der Formeln Ia und Ib ausgewählt ist:

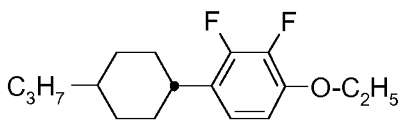

Ia

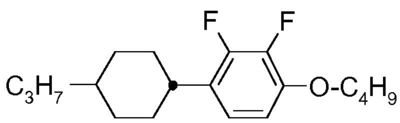

Ib.

3. Flüssigkristallmedium nach Anspruch 1 oder 2, **dadurch gekennzeichnet, dass** es mindestens eine Verbindung enthält, die aus der Gruppe der Verbindungen der Formeln IIa bis IId ausgewählt ist:

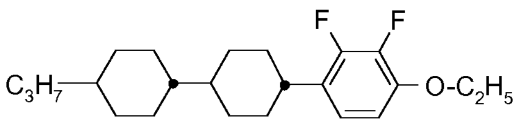

IIa

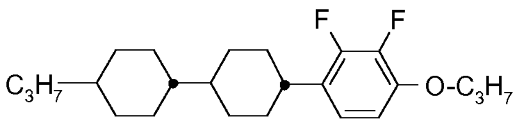

IIb

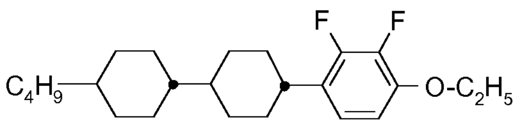

IIc

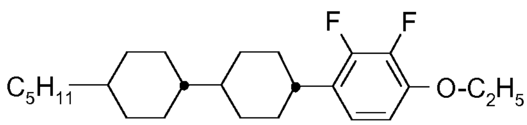

IId.

4. Flüssigkristallmedium nach einem oder mehreren der Ansprüche 1 bis 3, **dadurch gekennzeichnet, dass** es eine oder mehrere Verbindungen enthält, die aus der Gruppe der Verbindungen der Formeln IIIa und IIIb ausgewählt sind:

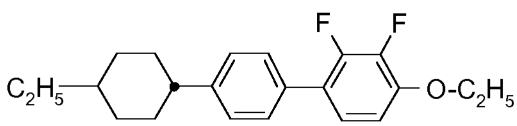

IIIa

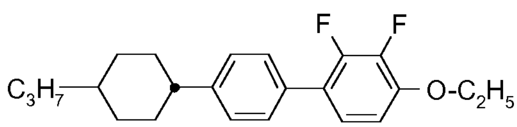

IIIb.

5. Flüssigkristallmedium nach einem oder mehreren der Ansprüche 1 bis 4, **dadurch gekennzeichnet, dass** es eine oder mehrere Verbindungen enthält, die aus der Gruppe der Verbindungen der Formeln IVa und IVb ausgewählt sind:

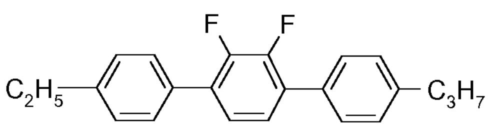

IVa

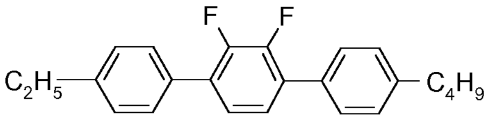

IVb.

**6.** Flüssigkristallmedium nach einem oder mehreren der Ansprüche 1 bis 5, **dadurch gekennzeichnet, dass** es eine oder mehrere Verbindungen enthält, die aus der Gruppe der Verbindungen der Formeln Va bis Vd ausgewählt sind:

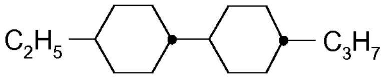

Va

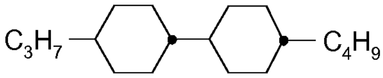

Vb

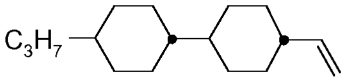

Vc

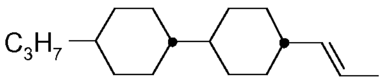

Vd.

**7.** Flüssigkristallmedium nach einem oder mehreren der Ansprüche 1 bis 6, **dadurch gekennzeichnet, dass** es eine Verbindung der Formel VIa enthält:

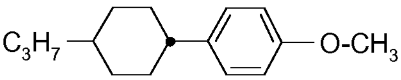

VIa.

**8.** Flüssigkristallmedium nach einem oder mehreren der Ansprüche 1 bis 7, **dadurch gekennzeichnet, dass** es eine oder mehrere Verbindungen aus der Gruppe der folgenden Formeln enthält:

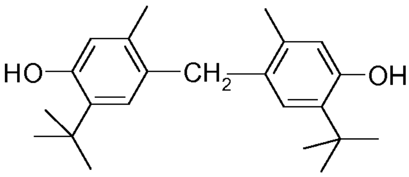

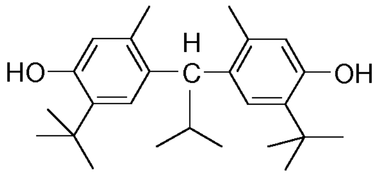

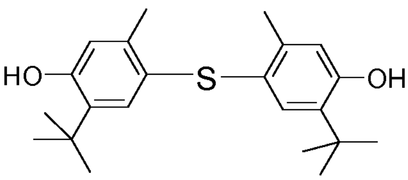

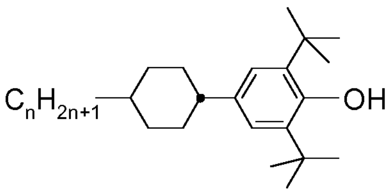

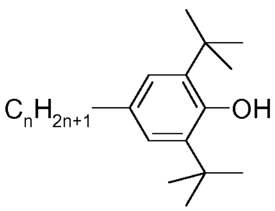

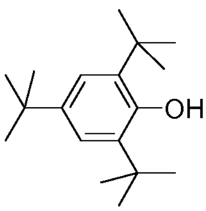

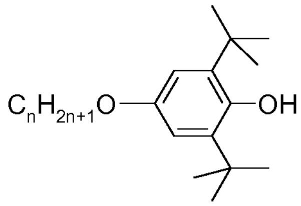

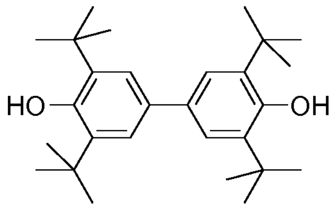

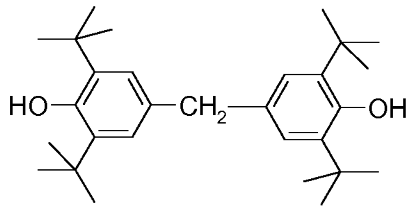

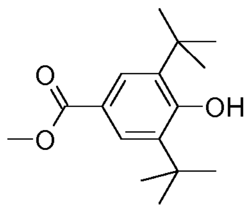

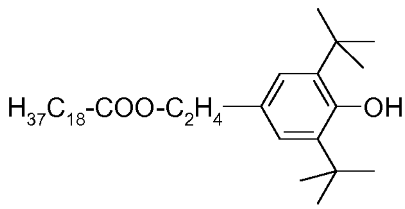

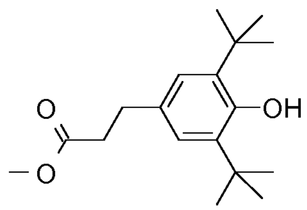

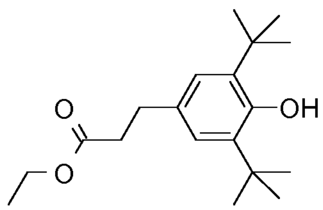

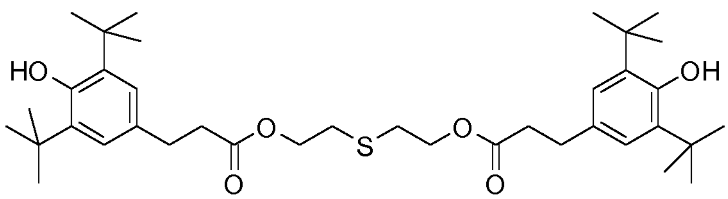

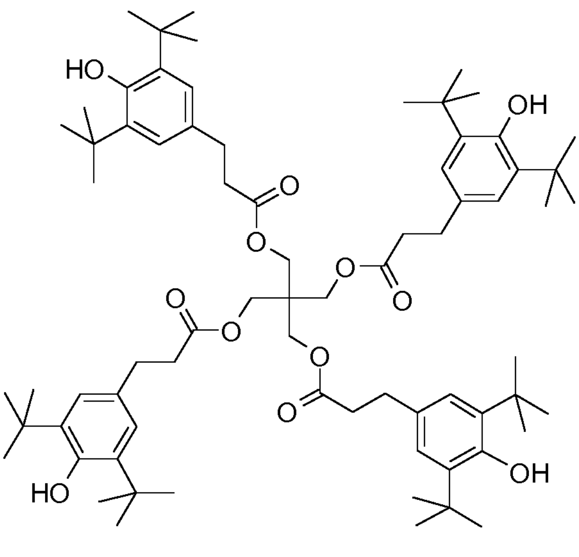

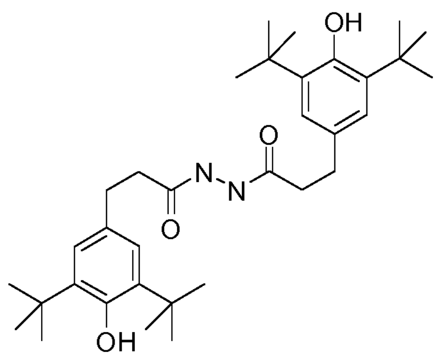

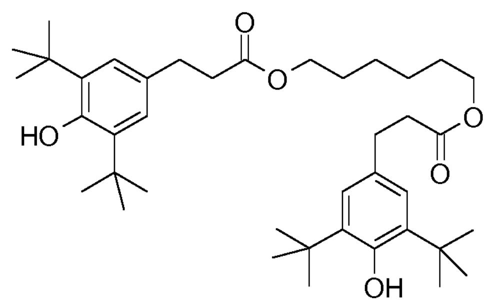

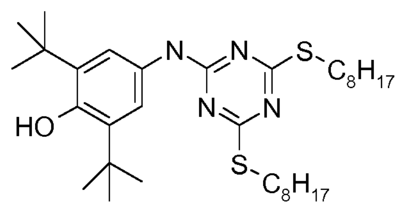

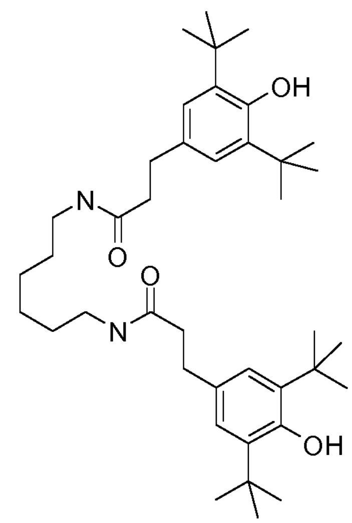

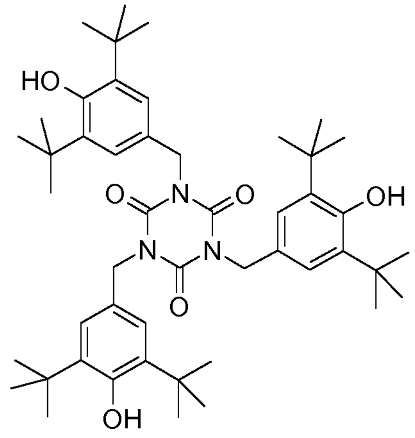

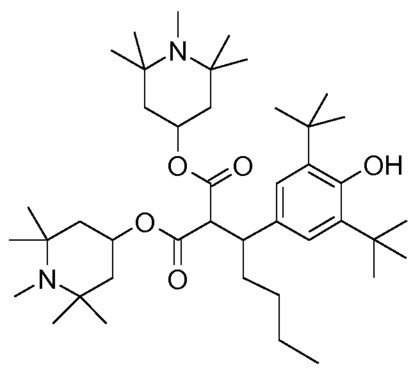

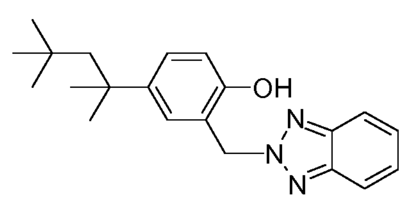

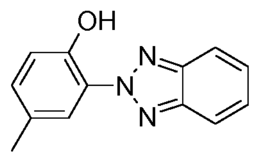

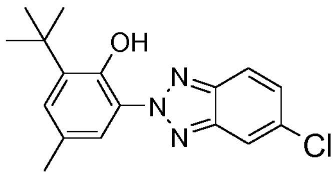

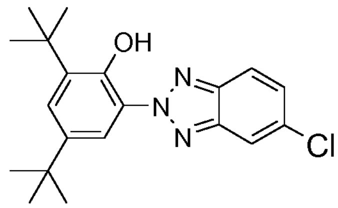

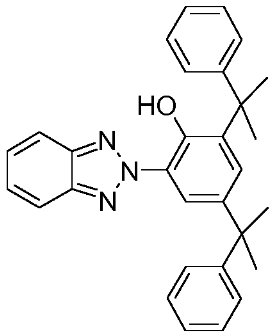

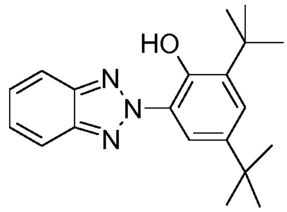

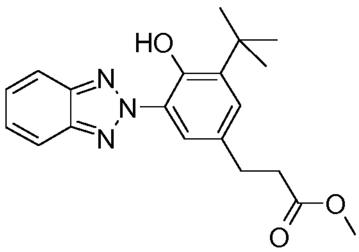

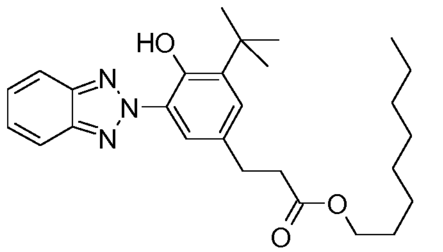

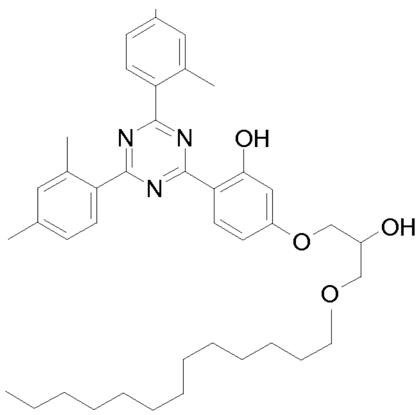

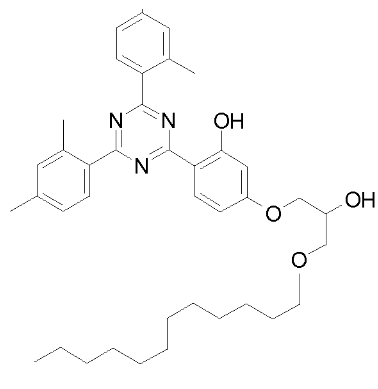

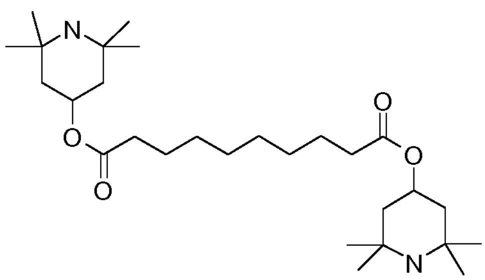

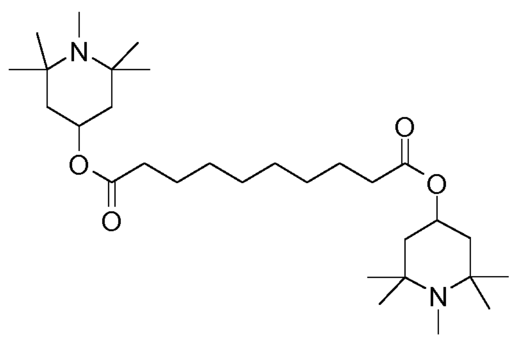

**9.** Flüssigkristallmedium nach einem oder mehreren der Ansprüche 1 bis 8, **dadurch gekennzeichnet, dass** es

- 13 bis 17 % der Verbindung der Formel Ia,
- 1 bis 7 % der Verbindung der Formel Ib,
- 4 bis 8 % der Verbindung der Formel IIa,
- 2 bis 6 % der Verbindung der Formel IIb,
- 4 bis 8 % der Verbindung der Formel IIc,
- 6 bis 10 % der Verbindung der Formel IIIa,
- 6 bis 10 % der Verbindung der Formel IIIb,
- 6 bis 10 % der Verbindung der Formel IVa,
- 4 bis 9 % der Verbindung der Formel IVb und
- 34 bis 40 % der Verbindung der Formel Vc.

enthält.

**10.** Flüssigkristallmedium nach einem oder mehreren der Ansprüche 1 bis 9, **dadurch gekennzeichnet, dass** das LC-Medium einen oder mehrere Zusatzstoffe enthält, die aus der Gruppe der pleochroitischen Farbstoffe, UV-Stabilisatoren, Antioxidantien, chiralen Dotierstoffe, reaktiven Mesogene, Polymerisationsinitiatoren, Mikropartikel und Nanopartikel ausgewählt sind.

**11.** Flüssigkristallmedium nach einem oder mehreren der Ansprüche 1 bis 10, **dadurch gekennzeichnet, dass** es eine oder mehrere Verbindungen enthält, die aus der Gruppe der Verbindungen der folgenden Formeln

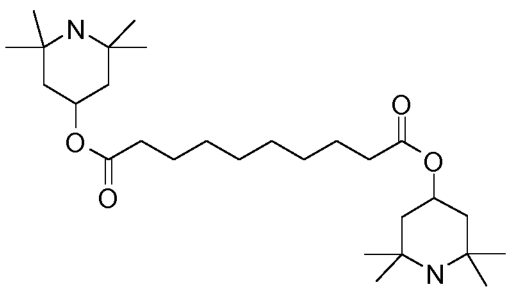

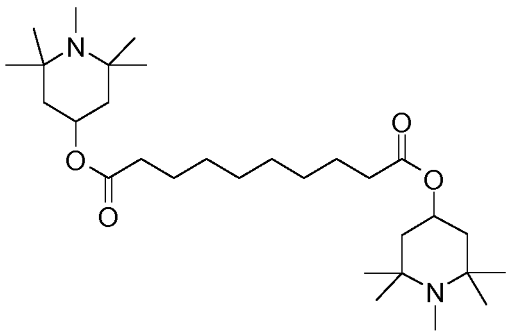

ausgewählt sind.

**12.** Verfahren zur Stabilisierung eines Flüssigkristallmediums nach einem oder mehreren der Ansprüche 1 bis 10 durch Zugabe von einer oder mehreren Verbindungen, die aus der Gruppe von Verbindungen der folgenden Formeln

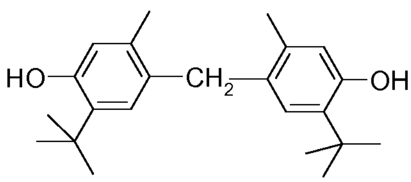

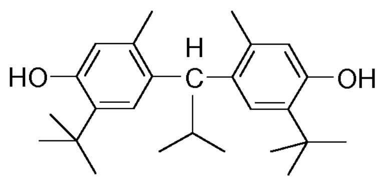

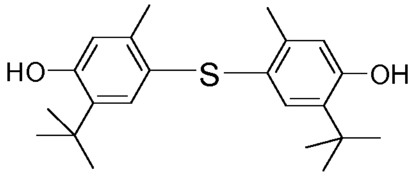

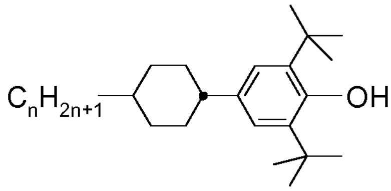

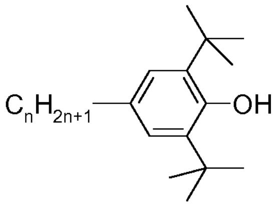

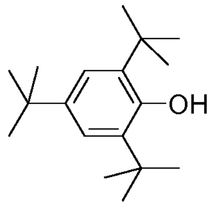

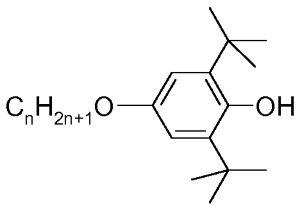

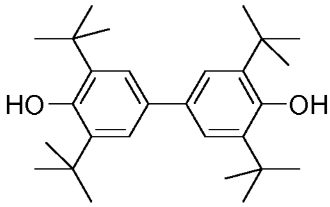

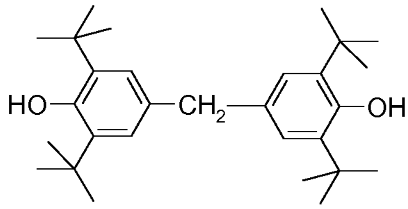

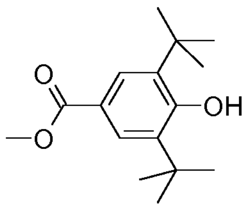

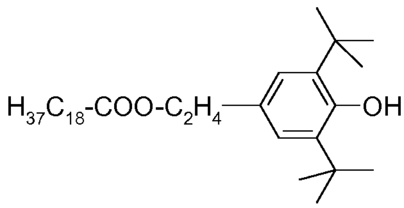

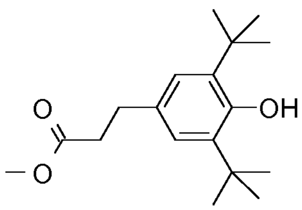

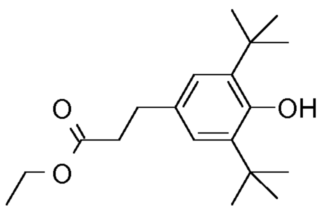

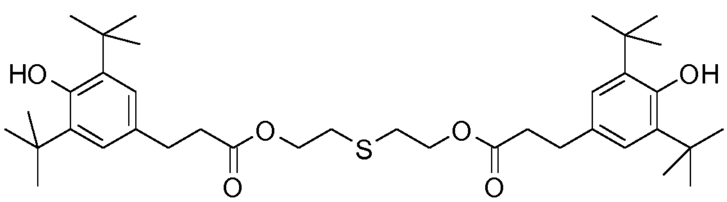

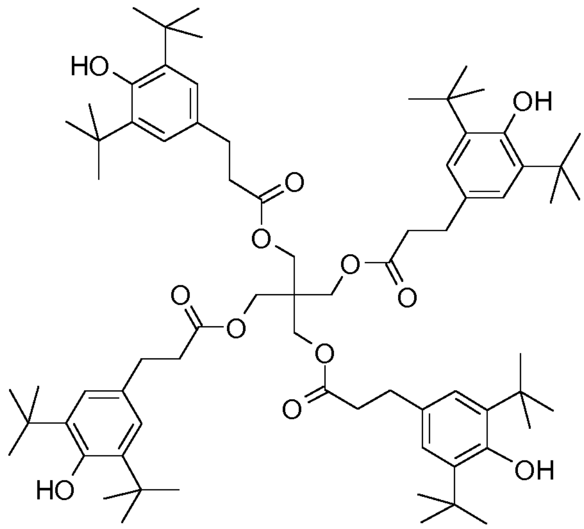

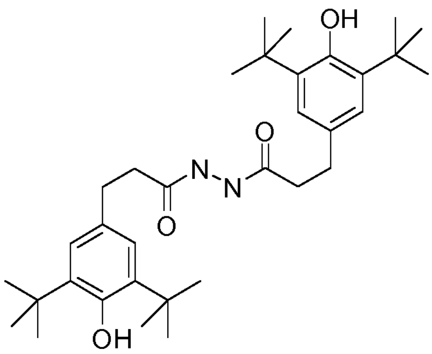

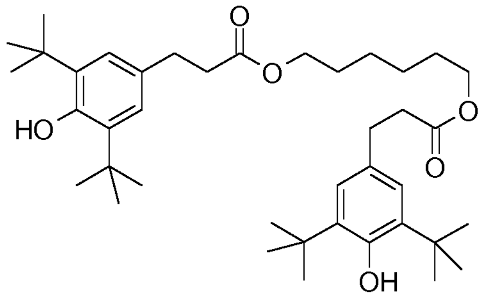

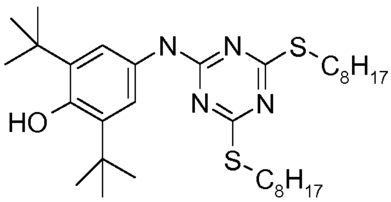

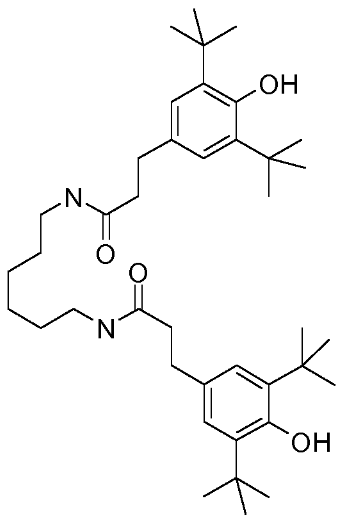

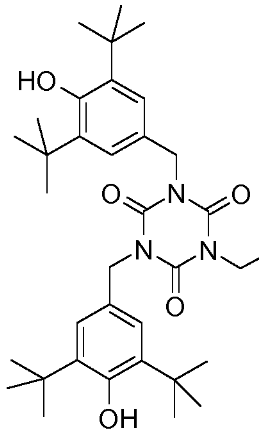

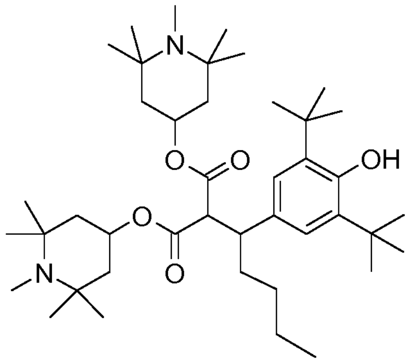

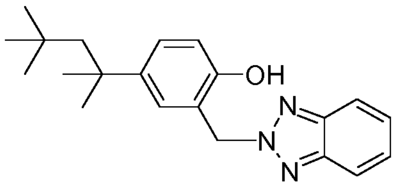

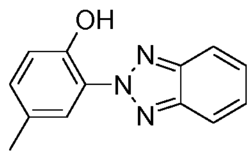

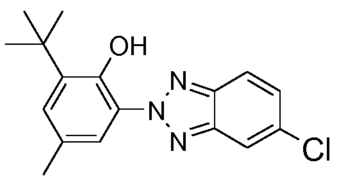

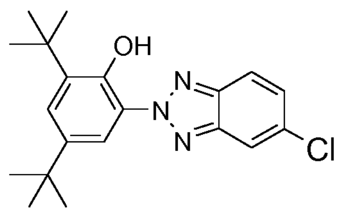

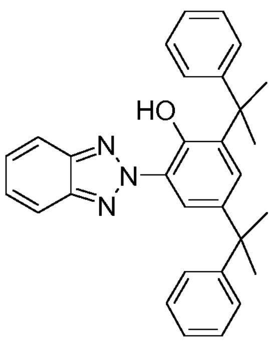

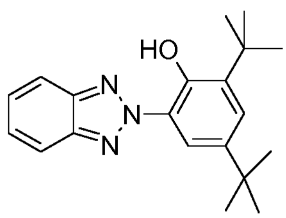

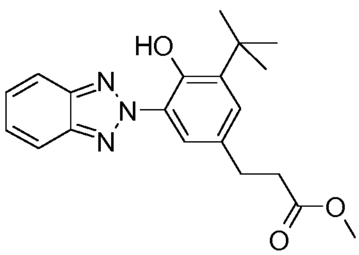

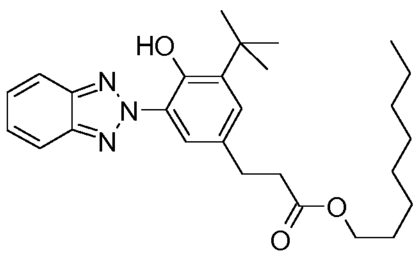

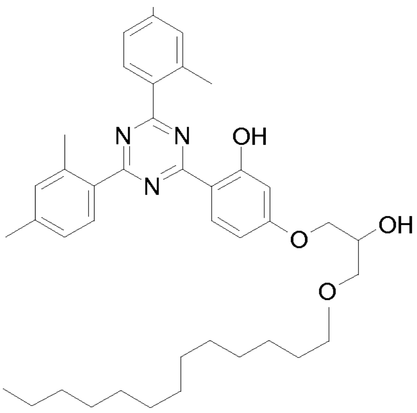

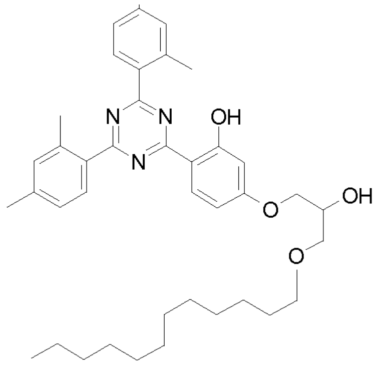

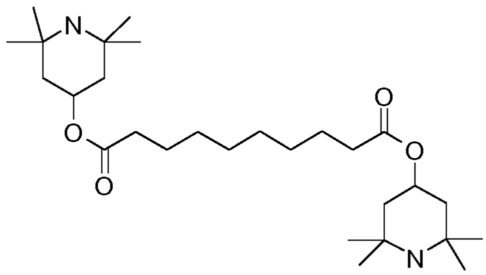

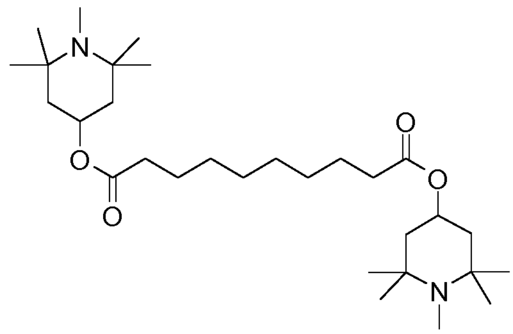

ausgewählt sind, zu dem Flüssigkristallmedium.

**13.** Verwendung eines Flüssigkristallmediums nach einem oder mehreren der Ansprüche 1 bis 11 für elektrooptische Zwecke.

**14.** Elektrooptische Flüssigkristallanzeige enthaltend ein Flüssigkristallmedium nach einem oder mehreren der Ansprüche 1 bis 11.

**15.** Flüssigkristall-Panel enthaltend ein Flüssigkristallmedium nach einem oder mehreren der Ansprüche 1 bis 11, das sich zwischen zwei Substraten befindet; und Elektroden zum Anlegen eines elektrischen Feldes an das Flüssigkristallmedium parallel zu den Oberflächen des Substrates, wobei des Flüssigkristallmedium dann, wenn kein elektrisches Feld angelegt ist, bezüglich der Oberflächen der Substrate vertikal ausgerichtet ist.

**Revendications**

**1.** Milieu cristallin liquide présentant une anisotropie diélectrique négative $\Delta\varepsilon$ comprenant :

- 14 à 24 % d'un ou de plusieurs composés de la formule I,
- 10 à 32 % d'un ou de plusieurs composés de la formule II,
- 12 à 20 % d'un ou de plusieurs composés de la formule III,
- 10 à 17 % d'un ou de plusieurs composés de la formule IV,
- 34 à 40 % d'un ou de plusieurs composés de la formule V et
- 0 à 9 % d'un ou de plusieurs composés de la formule VI

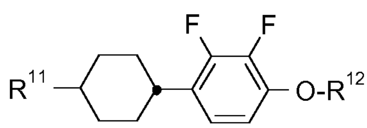

I

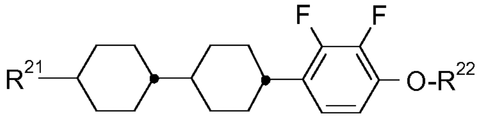

II

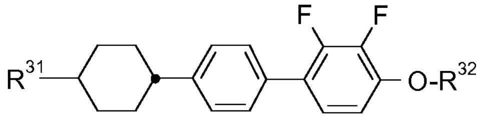

III

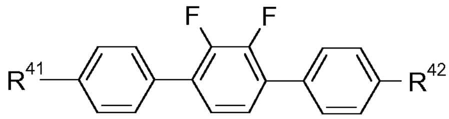

IV

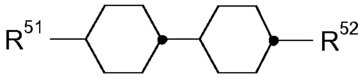

V

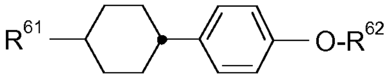

VI

dans lesquelles

$R^{11}$, $R^{21}$, $R^{31}$, $R^{41}$, $R^{51}$ et $R^{61}$ sont, indépendamment les uns des autres, alkyle en chaîne droite avec de 1 à 5 atomes de carbone,
$R^{12}$, $R^{22}$, $R^{32}$, $R^{42}$, $R^{52}$ et $R^{62}$ sont, indépendamment les uns des autres, alkyle en chaîne droite avec de 1 à 6 atomes de carbone et
$R^{52}$ à titre d'alternative, peut être alkényle avec de 2 à 5 atomes de carbone.

**2.** Milieu cristallin liquide selon la revendication 1, **caractérisé en ce qu'**il comprend au moins un composé choisi parmi le groupe de composés des formules Ia et Ib :

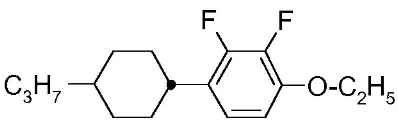

Ia

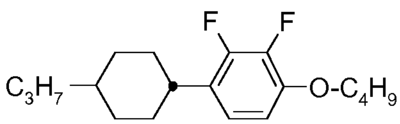

Ib.

**3.** Milieu cristallin liquide selon la revendication 1 ou 2, **caractérisé en ce qu'**il comprend au moins un composé choisi parmi le groupe de composés des formules IIa à IId :

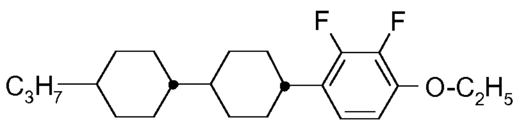

IIa

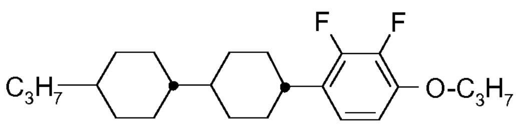

IIb

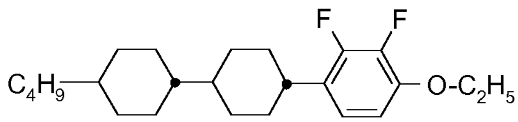

IIc

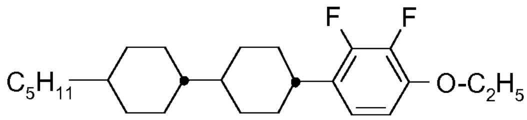

IId.

4. Milieu cristallin liquide selon une ou plusieurs des revendications 1 à 3, **caractérisé en ce qu'**il comprend un ou plusieurs composés choisis parmi le groupe de composés des formules IIIa et IIIb :

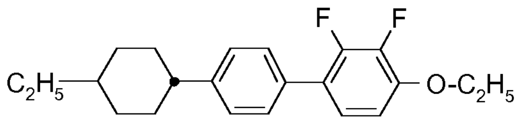

IIIa

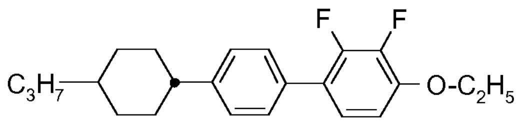

IIIb.

5. Milieu cristallin liquide selon une ou plusieurs des revendications 1 à 4, **caractérisé en ce qu'**il comprend un ou plusieurs composés choisis parmi le groupe de composés des formules IVa et IVb :

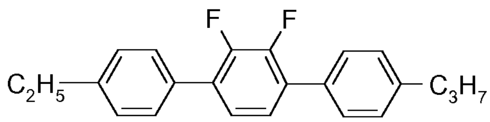

IVa

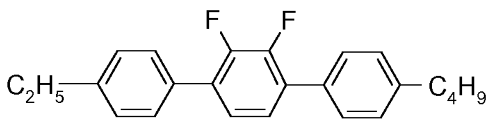

IVb.

6. Milieu cristallin liquide selon une ou plusieurs des revendications 1 à 5, **caractérisé en ce qu'**il comprend un ou plusieurs composés choisis parmi le groupe de composés des formules Va à Vd :

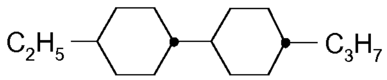

Va

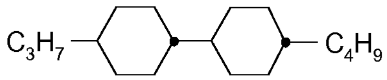

Vb

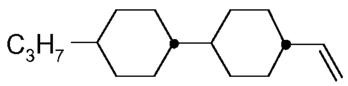

Vc

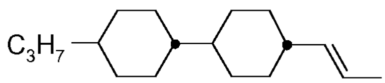

Vd.

7. Milieu cristallin liquide selon une ou plusieurs des revendications 1 à 6, **caractérisé en ce qu'**il comprend un composé de la formule VIa :

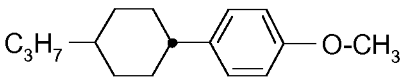

VIa.

**8.** Milieu cristallin liquide selon une ou plusieurs des revendications 1 à 7, **caractérisé en ce qu'**il comprend un ou plusieurs composés choisis parmi le groupe des formules qui suivent :

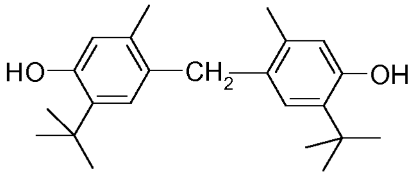

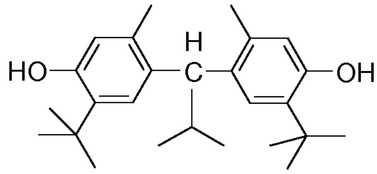

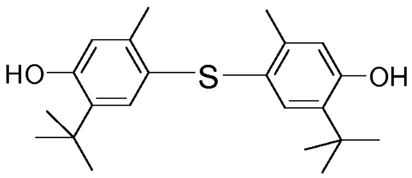

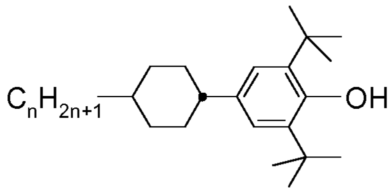

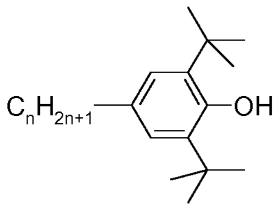

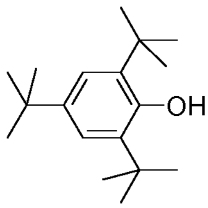

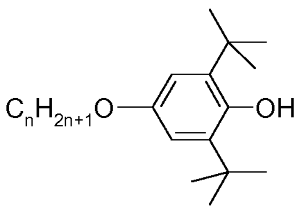

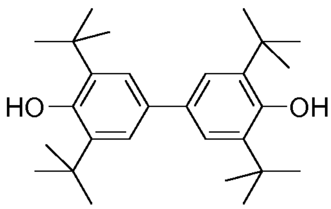

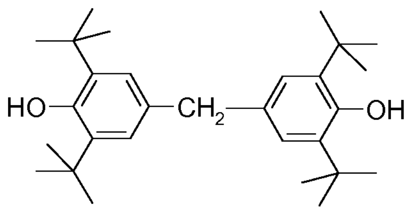

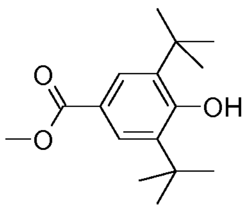

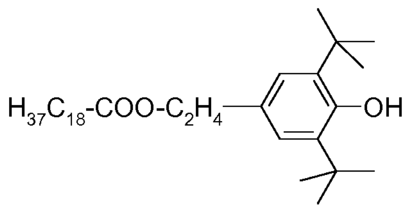

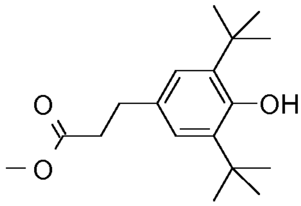

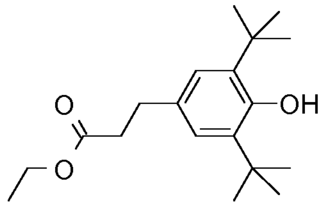

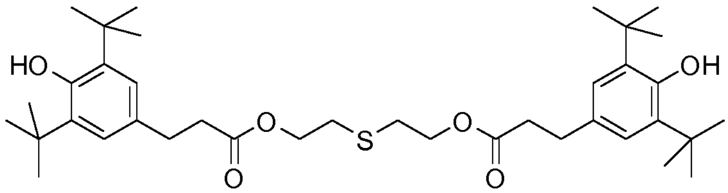

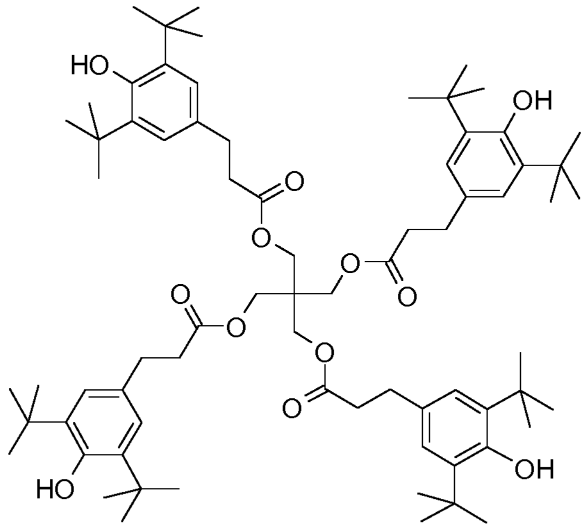

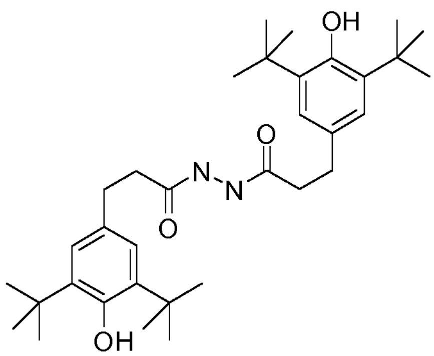

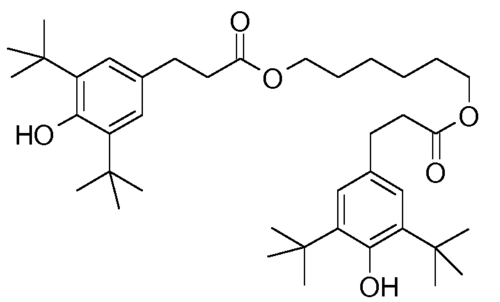

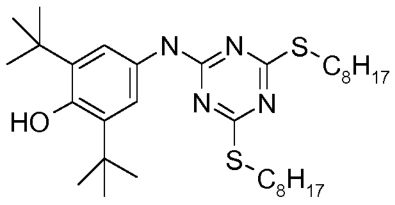

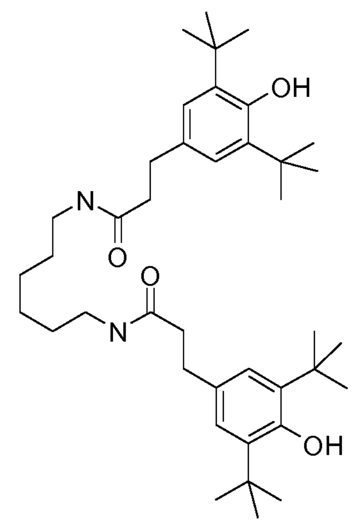

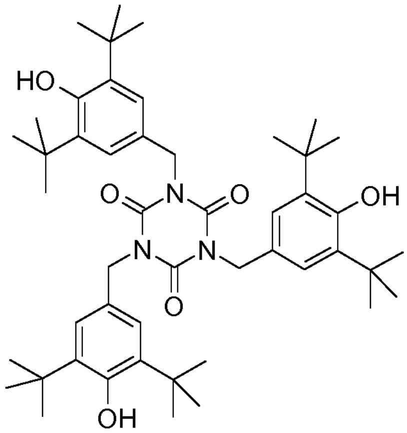

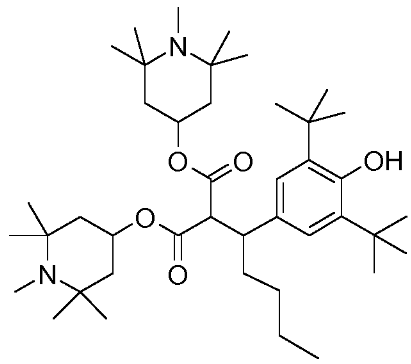

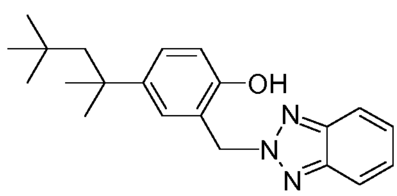

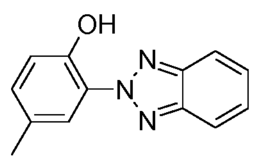

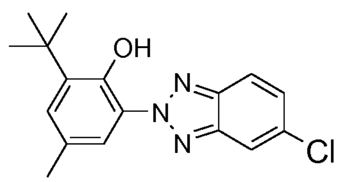

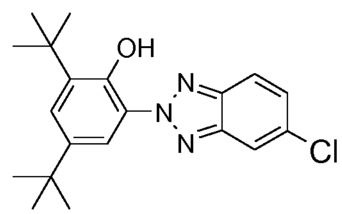

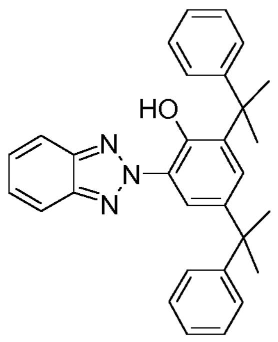

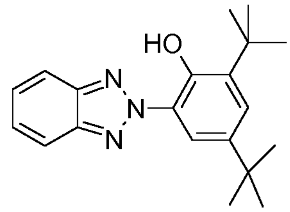

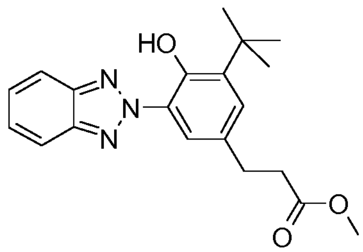

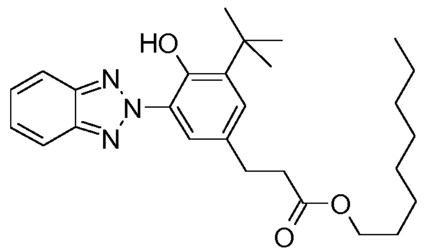

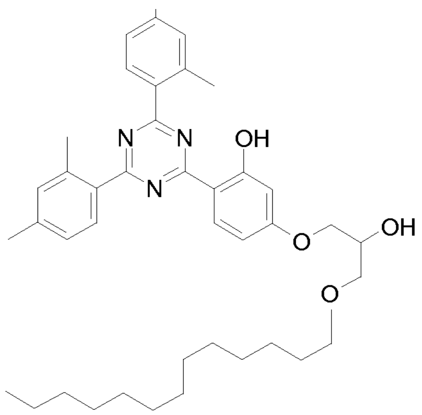

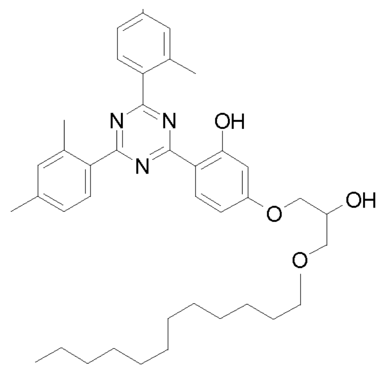

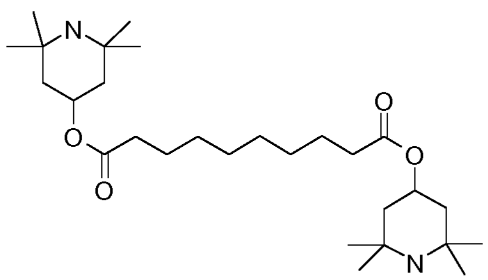

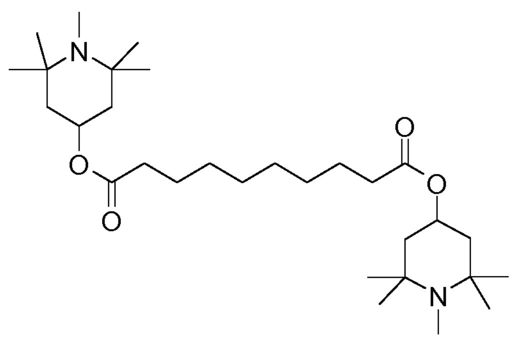

**9.** Milieu cristallin liquide selon une ou plusieurs des revendications 1 à 8, **caractérisé en ce qu'**il comprend :

- 13 à 17 % du composé de la formule Ia,
- 1 à 7 % du composé de la formule Ib,
- 4 à 8 % du composé de la formule IIa,
- 2 à 6 % du composé de la formule IIb,
- 4 à 8 % du composé de la formule IIc,
- 6 à 10 % du composé de la formule IIIa,
- 6 à 10 % du composé de la formule IIIb,
- 6 à 10 % du composé de la formule IVa,

- 4 à 9 % du composé de la formule IVb et
- 34 à 40 % du composé de la formule Vc.

**10.** Milieu cristallin liquide selon une ou plusieurs des revendications 1 à 9, **caractérisé en ce que** le milieu LC comprend un ou plusieurs additifs choisis parmi le groupe de colorants pléochroïques, de stabiliseurs UV, d'antioxydants, de dopants chiraux, de mésogènes réactifs, d'initiateurs de polymérisation, de microparticules et de nanoparticules.

**11.** Milieu cristallin liquide selon une ou plusieurs des revendications 1 à 10, **caractérisé en ce qu'**il comprend un ou plusieurs composés choisis parmi le groupe de composés des formules qui suivent :

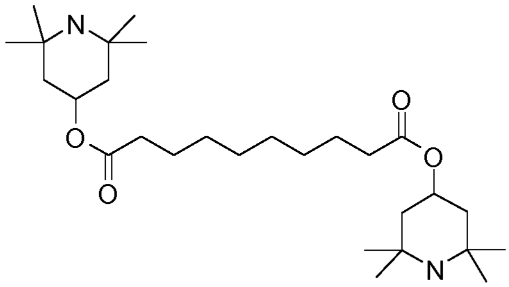

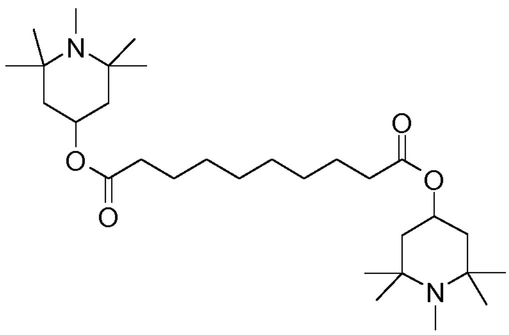

.

**12.** Procédé de stabilisation d'un milieu cristallin liquide selon une ou plusieurs des revendications 1 à 10 en ajoutant un ou plusieurs composés choisis parmi le groupe de composés des formules qui suivent :

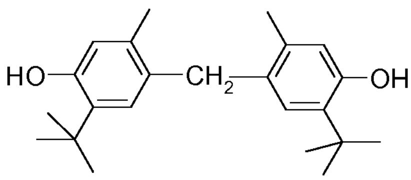
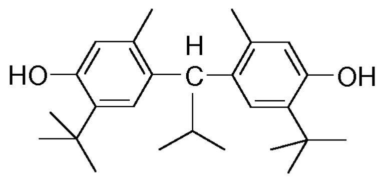

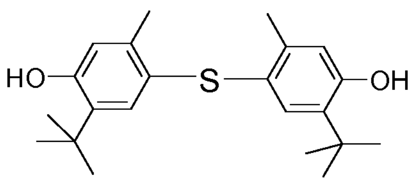
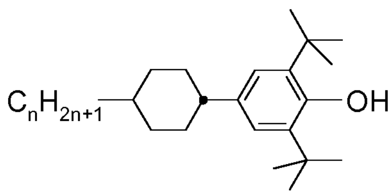

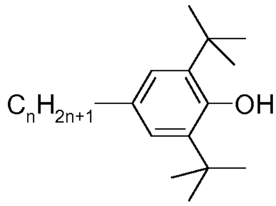

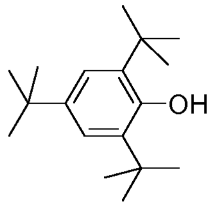

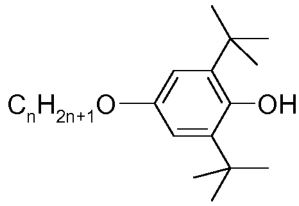

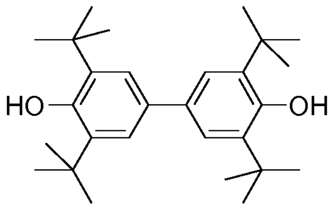

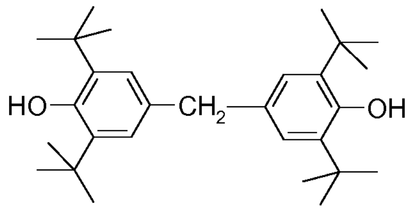

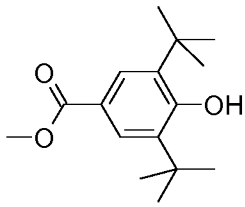

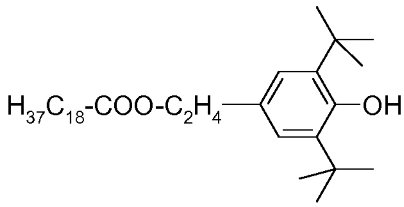

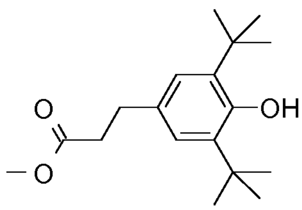

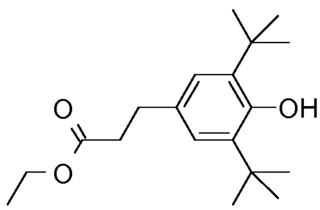

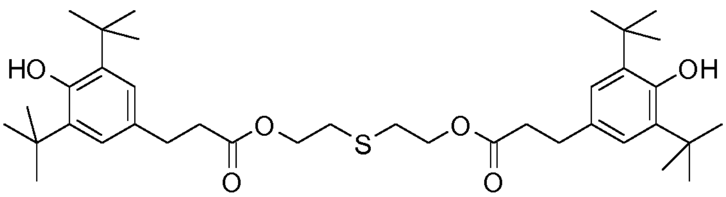

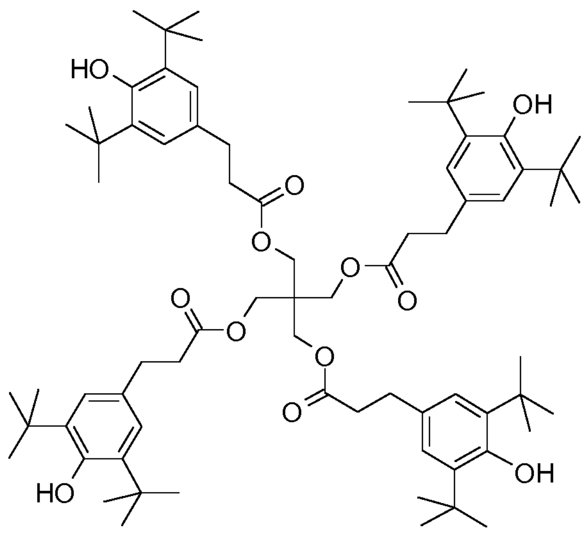

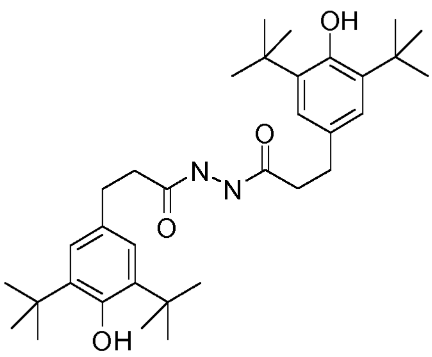

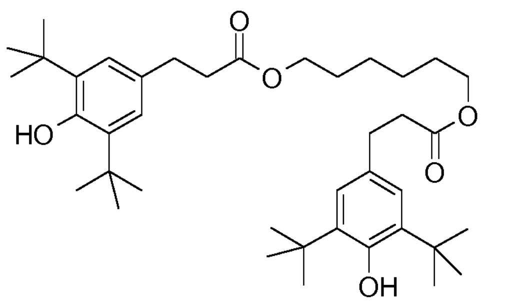

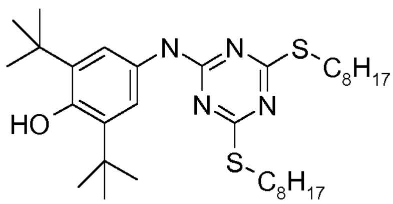

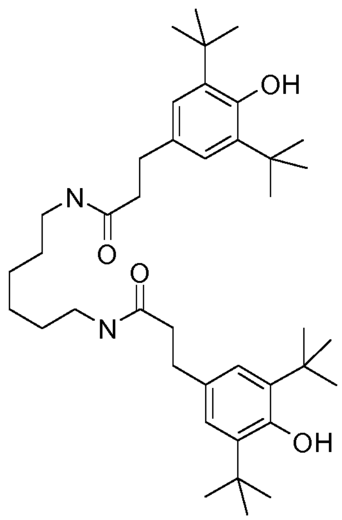

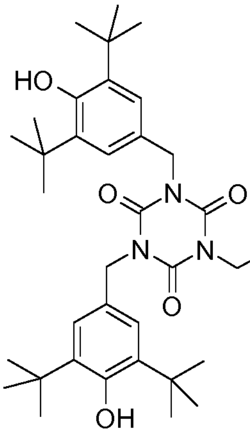

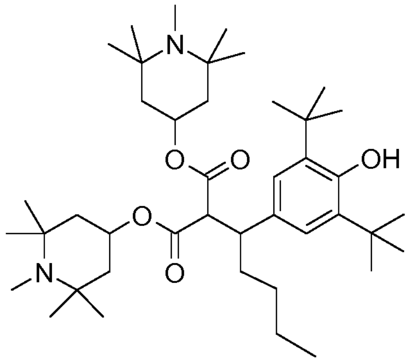

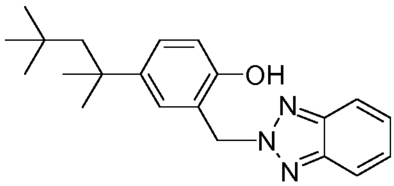

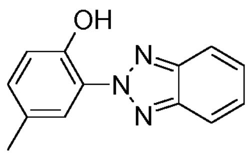

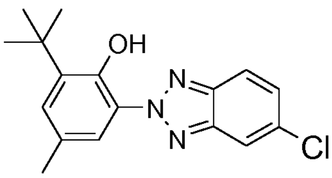

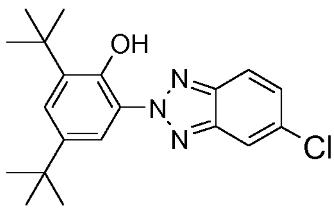

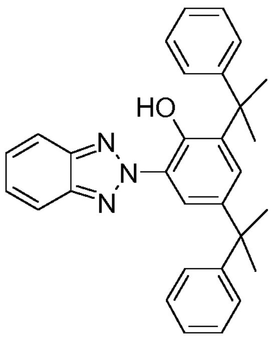

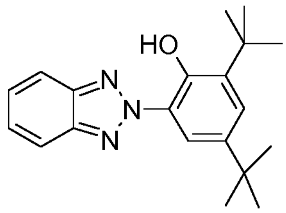

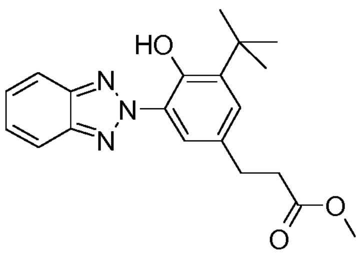

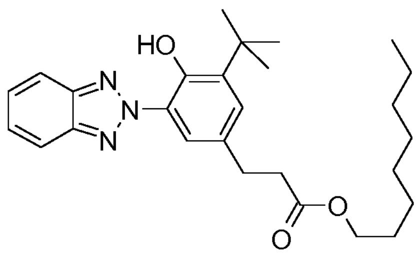

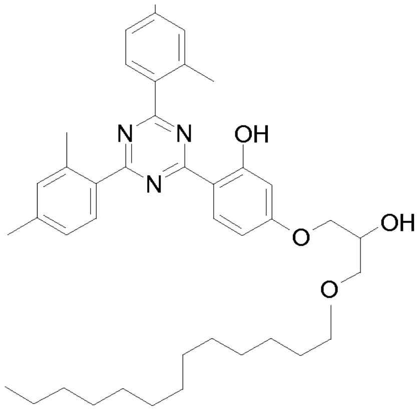

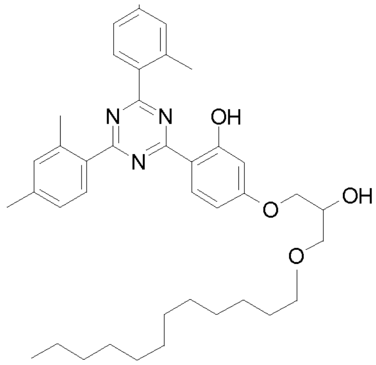

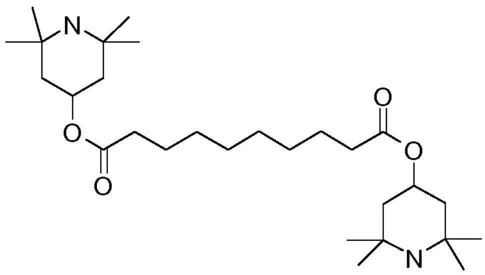

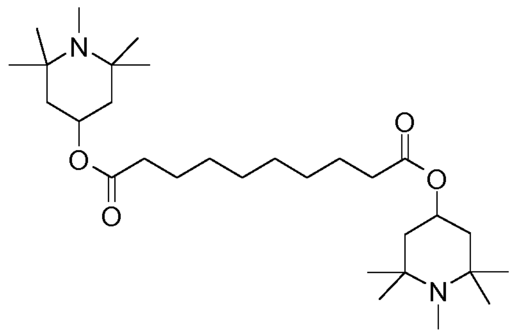

au milieu cristallin liquide.

13. Utilisation d'un milieu cristallin liquide selon une ou plusieurs des revendications 1 à 11 à des fins électro-optiques.

14. Affichage à cristaux liquides électro-optique contenant un milieu cristallin liquide selon une ou plusieurs des revendications 1 à 11.

15. Panneau à cristaux liquides comprenant un milieu cristallin liquide selon une ou plusieurs des revendications 1 à 11 pris en sandwich par une paire de substrats ; et des électrodes pour appliquer un champ électrique au milieu cristallin liquide parallèlement aux surfaces du substrat, le milieu cristallin liquide étant aligné verticalement par rapport aux surfaces des substrats à l'instant où aucun champ électrique n'est appliqué.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006115606 A1
- DE 102009015692 A1
- EP 2053113 A1
- US 2008273160 A1
- US 2008117379 A1


### Non-patent literature cited in the description


- **S. MATSUMOTO et al.** *Liquid Crystals,* 1989, vol. 5, 1320
- **K. NIWA et al.** *Proc. SID Conference,* June 1984, 304
- **G. WEBER et al.** *Liquid Crystals,* 1989, vol. 5, 1381
- Merck Liquid Crystals, Physical Properties of Liquid Crystals. Merck KGaA, November 1997